# EUROPÄISCHE PATENTANMELDUNG

(11) **EP 2 264 114 A2**
(43) Veröffentlichungstag der Anmeldung: **22.12.2010**
(21) Anmeldenummer: 09163248.9
(22) Anmeldetag: 19.06.2009
(51) Int. Cl.: C09J 175/00, C08K 5/00, C08K 5/25, C09J 5/00

(54) **Verwendung von Carbonsäurehydrazid zum Entkleben von Polyurethanklebstoffen**

(71) Anmelder: Sika Technology AG, 6340 Baar (CH)
(72) Erfinder: Burckhardt, Urs, 8049, Zürich (CH); Kramer, Andreas, 8006, Zürich (CH)
(74) Vertreter: Sika Patent Attorneys

(57) **Zusammenfassung**

Die vorliegende Erfindung betrifft die Verwendung von Carbonsäurehydrazid zum Entkleben von Polyurethanklebstoffen. Das Carbonsäurehydrazid liegt im Polyurethanklebstoff als Feststoff in freier Form vor, ist also nicht im Polymer eingebaut. Beim Erhitzen des Klebstoffs auf eine Temperatur von mindestens 80 °C wird das Polymer thermisch abgebaut.

Ein solcher Klebstoff weist den Vorteil auf, dass damit verklebte Bauteile in einem einfachen Verfahren gelöst werden können, wodurch die Reparatur, die Verwertung oder das Recycling der Bauteile leichter möglich ist.

## Beschreibung

### Technisches Gebiet

Die Erfindung betrifft das Gebiet der Polyurethanklebstoffe.

### Stand der Technik

Seit geraumer Zeit stellt das absichtliche Lösen von Klebeverbindungen, das so genannte Entkleben, eine besondere Herausforderung in der Klebetechnik dar. Dementsprechend zahlreich sind die beschriebenen Ansätze zum raschen Entkleben von Klebeverbindungen. Insbesondere bei der Reparatur, der Verwertung oder dem Recycling von verklebten Bauteilen ist die Möglichkeit einer raschen Entklebung der Klebeverbindung ein wichtiges Anliegen. Ein besonderes Interesse liegt dabei im Entkleben von elastischen Klebeverbindungen, welche typischerweise aus Polyurethanklebstoffen bestehen.

Im Stand der Technik gibt es unterschiedliche Ansätze zum Entkleben von Polyurethanklebstoffen. Einerseits sind dies durch Hitzeeinwirkung lösbare Klebstoffzusammensetzungen enthaltend ein in der Hitze expandierendes Material, welches durch seinen starken Expansionsdruck die Klebeverbindung schwächt oder zerstört. Als hitzeexpandierendes Material werden beispielsweise anorganische Substanzen wie Blähgraphit und Vermiculit oder organische Hohlfasern und Mikrokapseln eingesetzt, oder - wie in WO 2005/028583 A1 beschrieben - ein hitzelabiles Hydrazid in Form eines Sulfohydrazids oder Sulfonylhydrazids, welches bei Erwärmung in gasförmige Bestandteile zerfällt und somit ebenfalls durch Expansionsdruck die Klebeverbindung schwächt oder zerstört.

Weiterhin bekannt sind Versuche, das ausgehärtete Polyurethanpolymer thermisch abzubauen, beispielsweise durch den Einbau von funktionellen Gruppen mit leicht spaltbaren Bindungen wie Disulfidgruppen, Oxim-Urethangruppen oder Aryl-Ketogruppen, oder durch das Einbringen von komplexierten oder mikroverkapselten Aminen, einer festen Dicarbonsäure oder eines festen Dialkohols, oder durch das Einbringen fein dispergierter kleiner Teilchen, beispielsweise Eisenlegierungen oder Ferrite, mit speziellen magnetischen oder elektrischen Eigenschaften, die Energie in Form von elektromagnetischen Wechselfeldern in die Klebeverbindung eintragen und diese dadurch lokal stark erwärmen, was für sich allein und insbesondere in Verbindung mit Spaltungsreagentien, Treibmitteln oder im Polymer vorhandenen leicht spaltbaren Bindungen zur schnellen Entklebung führt.

Den im Stand der Technik beschriebenen Wegen zum thermischen Entkleben gemeinsam ist, dass sie bei der Anwendung in Polyurethanen, insbesondere in einkomponentigen feuchtigkeitshärtenden Polyurethanklebstoffen, für die Praxis signifikante Nachteile aufweisen, die eine Umsetzung in ein kommerzielles Produkt in Frage stellen oder verunmöglichen. So ist die Verträglichkeit vieler der genannten Zusatzstoffe wie Amine, Alkohole oder Sulfohydrazide mit Isocyanatgruppen aufweisenden Polyurethanpolymeren ungenügend; d.h. sie lösen vorzeitige Vernetzungsreaktionen mit den Isocyanatgruppen aus, was zu einer starken Verkürzung der Lagerfähigkeit des Klebstoffs führt. Weiterhin führen einige Zusatzstoffe, beispielsweise die expandierenden Materialien, oft zu einer bedeutenden Schwächung des Polyurethanpolymers im ausgehärteten Zustand, so dass die mechanische Festigkeit und Beständigkeit des Klebstoffs während seiner Gebrauchszeit erheblich herabgesetzt ist. Das Gleiche gilt auch für Systeme mit eingebauten Schwachstellen in Form von leicht spaltbaren Bindungen. Schliesslich liegt die Entklebungsgeschwindigkeit und -temperatur für die beschriebenen Systeme oft in einem ungünstigen Bereich, so dass entweder zu lange und zu stark erwärmt werden muss, damit sich eine ausreichende, für eine leichte Entklebung notwendige Schwächung des Klebstoffs einstellt, oder dass diese Schwächung umgekehrt bei zu tiefer Temperatur einsetzt und der Klebstoff damit schon während seiner Gebrauchszeit geschädigt wird und im Extremfall seine Funktion ganz verliert.

### Darstellung der Erfindung

Aufgabe der vorliegenden Erfindung ist es daher, Systeme bereitzustellen, welche das einfache Entkleben von Polyurethanklebstoffen in einem geeigneten Temperaturbereich ermöglichen und insbesondere auch in einkomponentigen feuchtigkeitshärtenden Polyurethanklebstoffen einsetzbar sind.

Überraschenderweise lässt sich diese Aufgabe mit der Verwendung eines Carbonsäurehydrazids wie in Anspruch 1 beschrieben lösen. Carbonsäurehydrazide sind im Allgemeinen bei Raumtemperatur feste, kristalline Substanzen mit einer geringen Löslichkeit im Polyurethanklebstoff. Überraschenderweise ist es möglich, sie als Bestandteil einer härtbaren Polyurethanzusammensetzung bei der Herstellung einer Klebeverbindung zu verwenden, ohne dass sie bei der Aushärtung der Zusammensetzung ins Polyurethanpolymer eingebaut werden, unter der Voraussetzung, dass die Aushärtung bei einer genügend tiefen Temperatur erfolgt. Überraschenderweise lassen sich Polyurethanklebstoffe enthaltend Carbonsäurehydrazide in einem geeigneten Temperaturbereich thermisch abbauen und somit entkleben, und dies bei praxistauglichen Gebrauchstemperaturen solcher Klebstoffe, insbesondere bei der Verwendung von bevorzugten Carbonsäurehydraziden. Mit den besonders bevorzugten Polycarbonsäurehydraziden lassen sich insbesondere auch einkomponentige feuchtigkeitshärtende Polyurethanklebstoffe mit einer guten Lagerstabilität realisieren.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein Gegenstand der vorliegenden Erfindung ist die Verwendung eines Carbonsäurehydrazids zum Entkleben einer Klebeverbindung umfassend einen ausgehärteten, das Carbonsäurehydrazid enthaltenden, Polyurethanklebstoff.

Der Begriff "Carbonsäurehydrazid" bezeichnet im vorliegenden Dokument das Kondensationsprodukt aus einer Carbonsäure und Hydrazin.

Als "Klebeverbindung" wird im vorliegenden Dokument eine feste Verbindung von mindestens zwei Substraten aus gleichem oder unterschiedlichem Material über einen Klebstoff bezeichnet.

Als "Entkleben" einer Klebeverbindung wird im vorliegenden Dokument die gezielte Schwächung des Klebstoffs in Bezug auf dessen Festigkeit bezeichnet. Dadurch wird die mechanische Trennung der Substrate mit relativ geringem Kraftaufwand ermöglicht, d.h. die Klebeverbindung gut lösbar. Die Trennung kann entweder adhäsiv zwischen Klebstoff und einer Substratoberfläche oder kohäsiv im Klebstoff erfolgen.

Als "ausgehärtet" wird im vorliegenden Dokument ein Polyurethanklebstoff bezeichnet, bei dem die chemische Vernetzungsreaktion im Wesentlichen abgeschlossen ist und der somit im Wesentlichen frei ist von Isocyanatgruppen.

Der Begriff "Polyurethanklebstoff" bezeichnet im vorliegenden Dokument einen Klebstoff, der im ausgehärteten Zustand ein Polyurethanpolymer enthält.

Der Begriff "Polyurethanpolymer" umfasst sämtliche Polymere, welche nach dem sogenannten Diisocyanat-Polyadditions-Verfahren hergestellt werden. Solche Polyurethanpolymere können neben Urethan- oder Thiourethangruppen insbesondere auch Harnstoffgruppen aufweisen.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyisocyanat" umfasst im vorliegenden Dokument Verbindungen mit zwei oder mehr Isocyanatgruppen, unabhängig davon, ob es sich dabei um monomere Diisocyanate, oligomere Polyisocyanate oder Isocyanatgruppen aufweisende Polymere mit einem relativ hohen Molekulargewicht handelt.

Als "aliphatisch" wird ein Amin bzw. ein Isocyanat bezeichnet, deren Amino- bzw. Isocyanatgruppen jeweils ausschliesslich an aliphatische, cycloaliphatische oder arylaliphatische Reste gebunden sind; entsprechend werden diese Gruppen als aliphatische Amino- bzw. Isocyanatgruppen bezeichnet.

Als "aromatisch" wird ein Amin bzw. ein Isocyanat bezeichnet, deren Amino- bzw. Isocyanatgruppen jeweils an einen aromatischen Rest gebunden sind; entsprechend werden diese Gruppen als aromatische Amino- bzw. Isocyanatgruppen bezeichnet.

Als "Raumtemperatur" wird in vorliegenden Dokument eine Temperatur im Bereich von 20 °C bis 25 °C bezeichnet.

Die fett markierten Bezeichnungen wie **HY, P, PI, PUP, K1, K2, S1, S2** oder dergleichen im vorliegenden Dokument dienen lediglich für das bessere Leseverständnis und Identifizierung.

Carbonsäurehydrazide sind typischerweise mindergiftige, bei Raumtemperatur feste, kristalline Substanzen mit einer relativ geringen Löslichkeit, die beispielsweise durch Kondensation von Carbonsäuren mit Hydrazin oder Hydrazinhydrat erhältlich sind.

Geeignete Carbonsäurehydrazide sind in einer ersten Ausführungsform Hydrazide von Monocarbonsäuren, einerseits von aliphatischen und arylaliphatischen Säuren wie insbesondere Laurinsäure, Palmitinsäure, Stearinsäure, Cyanessigsäure, 2,4-Dichlorphenoxyessigsäure, 4-Nitrophenoxyessigsäure, 1-Naphthylessigsäure; und andererseits von aromatischen und heteroaromatischen Monocarbonsäuren wie insbesondere Benzoesäure, 2-, 3- und 4-Chlorbenzoesäure, 2-, 3-und 4-Brombenzoesäure, 2- und 4-Toluylsäure, 2-, 3- und 4-Nitrobenzoesäure, Salicylsäure, 4-tert.Butyl-benzoesäure, 4-Methoxybenzoesäure, 4-Ethoxybenzoesäure, 4-Trifluorbenzoesäure, 4-Dimethylaminobenzoesäure, die isomeren Dichlorbenzoesäuren, Dimethoxybenzoesäuren und Trimethoxybenzoesäuren, Terephthalsäuremonomethylester, 1-Naphthylcarbonsäure, 3-Hydroxy-2-naphthylcarbonsäure, 4-Biphenylcarbonsäure, Nicotinsäure, Isonicotinsäure, 2-Thiophencarbonsäure, 4-Imidazolcarbonsäure und 3-Pyrazolcarbonsäure.

Geeignete Carbonsäurehydrazide sind in einer weiteren Ausführungsform Hydrazide von Polycarbonsäuren, wie insbesondere Monohydrazide und Dihydrazide von Dicarbonsäuren wie Glutarsäure, Pimelinsäure und Terephthalsäure; Mono-, Di- und Trihydrazide von Tricarbonsäuren wie Benzoltricarbonsäure; sowie besonders bevorzugt die im Folgenden beschriebenen Polycarbonsäurehydrazide **HY.**

Das Carbonsäurehydrazid ist bevorzugt feinteilig. Es weist insbesondere einen mittleren Teilchendurchmesser von kleiner als 120 µm, bevorzugt 0.5 bis 100 µm, besonders bevorzugt 0.5 bis 50 µm, auf.

Als Carbonsäurehydrazid bevorzugt ist ein Carbonsäurehydrazid mit einem Schmelzpunkt im Bereich von 160 °C bis 260 °C, insbesondere von 175 °C bis 240 °C. Dies sind insbesondere die Hydrazide von 4-Nitrophenoxyessigsäure, 1-Naphthylessigsäure, Nicotinsäure, Isonicotinsäure, 1-Naphthylcarbonsäure, 4-Biphenylcarbonsäure, 3-Hydroxy-2-naphthylcarbonsäure, Benzothiophen-2-carbonsäure, Imidazol-4-carbonsäure, 4-Nitrobenzoesäure, 4-Chlorbenzoesäure, den isomeren Dichlorbenzoesäuren sowie die im Folgenden beschriebenen Polycarbonsäurehydrazide **HY.**

Als Carbonsäurehydrazid besonders bevorzugt ist ein Polycarbonsäurehydrazid **HY.** Das Polycarbonsäurehydrazid **HY** besitzt einen Schmelzpunkt im Bereich von 160 °C bis 260 °C, insbesondere von 175 °C bis 240 °C, und weist insbesondere die Formel (I) auf, 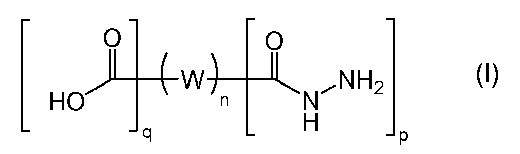 wobei
W für einen (p+q)-wertigen organischen Rest steht;
p für 1 oder 2 oder 3, und
q für 0 oder 1 oder 2, stehen,
mit der Massgabe, dass (p+q) für 2 oder 3 oder 4 steht; und
n für 0 oder 1 steht.

Polycarbonsäurehydrazide **HY** der Formel (I), bei denen n für 0 steht, sind abgeleitet von Oxalsäure. Die Summe (p+q) steht in diesem Fall für 2.

Polycarbonsäurehydrazide **HY** sind beispielsweise erhältlich durch die Kondensation geeigneter Polycarbonsäuren mit Hydrazin oder Hydrazinhydrat, wobei als Polycarbonsäuren insbesondere Oxalsäure, Bernsteinsäure, Adipinsäure, Korksäure, Azelainsäure, Sebacinsäure, Dodecandisäure und Isophthalsäure geeignet sind.

Bevorzugt ist das Polycarbonsäurehydrazid **HY** ein Dicarbonsäurehydrazid, insbesondere ein Dicarbonsäuredihydrazid.

Insbesondere geeignet als Polycarbonsäurehydrazid **HY** sind Oxalsäuredihydrazid, Bernsteinsäuredihydrazid, Adipinsäuredihydrazid, Korksäuredihydrazid, Azelainsäuredihydrazid, Sebacinsäuredihydrazid, Dodecandisäuredihydrazid und Isophthalsäuredihydrazid.

Besonders bevorzugt ist das Polycarbonsäurehydrazid **HY** ausgewählt aus der Gruppe bestehend aus Oxalsäuredihydrazid, Adipinsäuredihydrazid, Azelainsäuredihydrazid, Sebacinsäuredihydrazid und Isophthalsäuredihydrazid.

Am meisten bevorzugt als Polycarbonsäurehydrazid **HY** sind Oxalsäuredihydrazid und Adipinsäuredihydrazid.

Mit Polycarbonsäurehydraziden **HY** können insbesondere auch einkomponentige Polyurethanklebstoffe formuliert werden, welche bei Temperaturen bis etwa 60 °C ausgezeichnet lagerfähig sind.

Das Carbonsäurehydrazid ist in der vorliegenden Erfindung Bestandteil eines ausgehärteten Polyurethanklebstoffs, wobei es darin in freier Form, d.h. mit chemisch unveränderten Hydrazidgruppen, vorliegt und somit nicht im Polyurethanpolymer des Klebstoffs eingebaut, sondern als Feststoff in diesem dispergiert ist. Beim Erhitzen des Klebstoffs beginnt das Carbonsäurehydrazid überraschenderweise mit dem Polyurethanpolymer zu reagieren. Dieses enthält typischerweise Urethan- und/oder Thiourethan- und/oder Harnstoffgruppen, wobei die Urethangruppen insbesondere aus der Reaktion von Isocyanatgruppen mit Hydroxylgruppen, die Thiourethangruppen insbesondere aus der Reaktion von Isocyanatgruppen mit Mercaptogruppen, und die Harnstoffgruppen insbesondere aus der Reaktion von Isocyanatgruppen mit Aminogruppen oder mit Wasser stammen. Die durch Hitze initiierte Reaktion des Carbonsäurehydrazids mit dem Polyurethanpolymer erfolgt vermutlich im Wesentlichen über die Urethan-, Thiourethan- und/oder Harnstoffgruppen, indem diese von den sehr nucleophilen Hydrazidgruppen angegriffen und geöffnet werden, wobei beispielsweise Acylsemicarbazidgruppen der Formel (II) sowie freie Hydroxyl-, Mercapto- und/oder Aminogruppen entstehen können. Mit der Öffnung der Urethan-, Thiourethan- und/oder Harnstoffgruppen vermindert sich die Kettenlänge bzw. das Molekulargewicht des Polyurethanpolymers; dieses wird durch die Reaktion mit dem Carbonsäurehydrazid in der Kette gespalten. In Abhängigkeit der Anzahl an geöffneten Urethan-, Thiourethan- und/oder Harnstoffgruppen kommt es damit zu einem mehr oder weniger stark ausgeprägten Abfall der mechanischen Festigkeit des ausgehärteten Polyurethanklebstoffs, wodurch das Entkleben der Klebeverbindung resultiert. Diese kann dann mit deutlich weniger Kraftaufwand mechanisch getrennt werden als vor dem Entkleben.

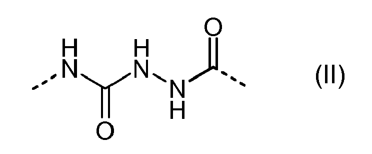

Zum Entkleben wird der ausgehärtete Polyurethan klebstoff enthaltend das Carbonsäurehydrazid erhitzt. Die Temperatur, auf welche der Klebstoff zum Entkleben der Klebeverbindung erhitzt wird, wird im Folgenden auch als "Entklebungstemperatur" bezeichnet.

Die Entklebungstemperatur liegt insbesondere bei mindestens 80 °C, bevorzugt oberhalb von 100 °C, besonders bevorzugt im Bereich von 120 °C bis 240 °C, und am meisten bevorzugt im Bereich von 140 °C bis 220 °C.

Wichtig ist, dass das Entkleben erst deutlich oberhalb der "Gebrauchstemperatur" - d.h. der während des Gebrauchs der Klebeverbindung maximal auftretenden Temperatur - stattfindet, damit der Klebstoff seine Klebkraft dauerhaft behält und es nicht ungewollt zum vorzeitigen Entkleben kommt. Für Verklebungen in Innenräumen sind Gebrauchstemperaturen bis ungefähr 50 °C zu erwarten. Für solche Anwendungen sind Entklebungstemperaturen im Bereich von 80 °C bis 100 °C gut geeignet. Für Klebeanwendungen hingegen, welche im Aussenbereich eingesetzt werden, sind höhere Gebrauchstemperaturen zu erwarten. Klebeverbindungen an Automobilen, Bussen oder Schienenfahrzeugen beispielsweise weisen Gebrauchstemperaturen von gegen 80 °C auf. Für solche Anwendungen liegt die Entklebungstemperatur bevorzugt oberhalb von 100 °C, insbesondere im Bereich von 120 °C bis 240 °C, am meisten bevorzugt im Bereich von 140 °C bis 220 °C. Für diese relativ hohen Gebrauchs- beziehungsweise Entklebungstemperaturen sind Carbonsäurehydrazide mit einem Schmelzpunkt im Bereich von 160 °C bis 260 °C, insbesondere von 175 °C bis 240 °C, besonders geeignet. Diese Carbonsäurehydrazide sind im Temperaturbereich unterhalb von etwa 100 °C im ausgehärteten Polyurethanklebstoff, vermutlich aufgrund ihrer geringen Löslichkeit im Polyurethanklebstoff und ihres hohen Schmelzpunkts, weitgehend unreaktiv. Beim Erhitzen auf eine Temperatur oberhalb von 100 °C beginnen diese Carbonsäurehydrazide dann aber mit dem Polyurethanpolymer, vermutlich in der beschriebenen Weise, zu reagieren; die Reaktion setzt meist schon deutlich unterhalb des Schmelzpunkts des Carbonsäurehydrazids ein.

Die Polycarbonsäurehydrazide **HY** weisen gegenüber Monocarbonsäurehydraziden den Vorteil auf, dass sie eine noch geringere Löslichkeit in Polyurethanklebstoffen aufweisen und somit bei ähnlichem Schmelzpunkt des Carbonsäurehydrazids im Allgemeinen erst bei höheren Temperaturen mit dem Polyurethanpolymer zu reagieren beginnen.

Die Menge an Carbonsäurehydrazid im ausgehärteten Polyurethanklebstoff wird vorteilhaft so eingestellt, dass das Verhältnis zwischen den Hydrazidgruppen und der Summe aus Urethan-, Thiourethan- und Harnstoffgruppen 0.2 bis 3, insbesondere 0.5 bis 2, beträgt. Dabei ist zu berücksichtigen, ob im Klebstoff noch weitere gegenüber Hydrazidgruppen reaktive Gruppen vorhanden sind, wie insbesondere von latenten Amin-Härtern wie Enaminen, Oxazolidinen, Aldiminen oder Ketiminen stammende Aldehyd- oder Ketogruppen. Wenn dies der Fall ist, sollte die Anzahl an Hydrazidgruppen um die Anzahl solcher weiteren reaktiven Gruppen erhöht werden, weil ein Teil der Hydrazidgruppen beim Lagern oder spätestens beim Aufheizen des Klebstoffs mit diesen weiteren reaktiven Gruppen reagieren kann und damit für das Entkleben der Klebeverbindung über die Spaltung der Polyurethanpolymer-Ketten nicht zur Verfügung steht.

Somit ist das Carbonsäurehydrazid im ausgehärteten Polyurethanklebstoff vorteilhaft in einer solchen Menge vorhanden, dass das Verhältnis (n_{HY'} - n_{AK'}) n_{UH} 0.2 bis 3, insbesondere 0.5 bis 2, beträgt,
wobei n_{HY'} für die Anzahl der im ausgehärteten Polyurethanklebstoff vorhandenen Hydrazidgruppen steht,
n_{AK'} für die Anzahl der im ausgehärteten Polyurethan klebstoff vorhandenen Aldehyd- und Ketogruppen steht, und
n_{UH} für die Anzahl der im ausgehärteten Polyurethan klebstoff vorhandenen Urethan-, Thiourethan- und Harnstoffgruppen steht.

Für das Entkleben einer Klebeverbindung ist es vorteilhaft, wenn das Carbonsäurehydrazid im ausgehärteten Polyurethan klebstoff in fein dispergierter Form vorliegt, damit es beim Erhitzen für das Entkleben der Klebeverbindung möglichst überall im Klebstoff verfügbar ist.

Ein ausgehärteter Polyurethanklebstoff enthaltend mindestens ein Carbonsäurehydrazid ist beispielsweise erhältlich durch die Aushärtung einer härtbaren Zusammensetzung umfassend mindestens ein Polyisocyanat und mindestens ein Carbonsäurehydrazid bei einer genügend tiefen Temperatur, die gewährleistet, dass das Carbonsäurehydrazid vor und während der Aushärtung der Zusammensetzung nicht in nennenswertem Ausmass mit dem Polyisocyanat reagiert. Die Aushärtungstemperatur liegt bevorzugt unterhalb von 60 °C, insbesondere im Bereich von Raumtemperatur. Wird ein Carbonsäurehydrazid mit einem Schmelzpunkt im Bereich von 160 °C bis 260 °C, insbesondere von 175 °C bis 240 °C, insbesondere ein Polycarbonsäurehydrazid **HY,** eingesetzt, so bleibt dieses auch bei einer höheren Aushärtungstemperatur, bis in den Bereich von 80 °C, gegenüber dem Polyisocyanat im Wesentlichen unreaktiv und verbleibt somit weitestgehend in freier Form im ausgehärteten Polyurethanklebstoff, wo es für das Entkleben einer diesen Klebstoff umfassenden Klebeverbindung zur Verfügung steht.

Das Carbonsäurehydrazid ist in der härtbaren Zusammensetzung vorteilhaft in einer solchen Menge vorhanden, dass das Verhältnis (n_{HY} - n_{AK}) / n_{NCO} 0.2 bis 3, insbesondere 0.5 bis 2, beträgt,
wobei n_{HY} für die Anzahl der in der Zusammensetzung vorhandenen Hydrazidgruppen steht,
n_{AK} für die Anzahl der in der Zusammensetzung freisetzbaren und vorhandenen Aldehyd- und Ketogruppen steht, und
n_{NCO} für die Anzahl der in der Zusammensetzung vorhandenen Isocyanatgruppen steht.

Das Polyisocyanat ist bevorzugt ein Polyisocyanat **P.**

Das Polyisocyanat **P** ist in einer Ausführungsform ein Isocyanatgruppen aufweisendes Polyurethanpolymer **PUP.**

Ein geeignetes Polyurethanpolymer **PUP** ist insbesondere erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer **PUP** nach der Umsetzung aller Hydroxylgruppen des Polyols ein Gehalt an freien Isocyanatgruppen von 0.5 bis 15 Gewichts-%, besonders bevorzugt von 0.5 bis 5 Gewichts-%.

Gegebenenfalls kann das Polyurethanpolymer **PUP** unter Mitverwendung von Weichmachern hergestellt werden, wobei die verwendeten Weichmacher keine gegenüber Isocyanaten reaktive Gruppen enthalten.

Als Polyole für die Herstellung eines Polyurethanpolymers **PUP** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole.
   Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und
   dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole, oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Als Polyole bevorzugt sind Polyether-, Polyester-, Polycarbonat- und Polyacrylatpolyole, bevorzugt Di- und Triole. Besonders bevorzugt sind Polyetherpolyole, insbesondere Polyoxypropylen- und Polyoxypropylenpolyoxyethylenpolyole, sowie flüssige Polyesterpolyole und Polyetherpolyesterpolyole.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **PUP** mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung eines Isocyanatgruppen aufweisenden Polyurethanpolymers **PUP** werden aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpenta-methylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-l-methylethyl)-naphthalin, Dimer- und Trimerfettsäureisocyanate wie 3,6-Bis-(9-isocyanatononyl)-4,5-di-(1 -heptenyl)-cyclo-hexen (Dimeryldiisocyanat), α,α,α',α',α",α"-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Bevorzugt sind Polyurethanpolymere **PUP** mit aromatischen Isocyanatgruppen.

Das Polyisocyanat **P** ist in einer weiteren Ausführungsform ein Polyisocyanat **PI** in der Form eines monomeren Di- oder Triisocyanates oder eines Oligomeren eines monomeren Diisocyanates oder eines Derivates eines monomeren Diisocyanates, wobei als monomeres Di- oder Triisocyanat insbesondere die vorgenannten aromatischen und aliphatischen Di- und Triisocyanate geeignet sind.

Als Polyisocyanat **PI** besonders geeignet sind Oligomere oder Derivate von monomeren Diisocyanaten, insbesondere von HDI, IPDI, TDI und MDI. Kommerziell erhältliche Typen sind insbesondere HDI-Biurete, beispielsweise als Desmodur^{®} N 100 und N 3200 (von Bayer), Tolonate^{®} HDB und HDB-LV (von Rhodia) und Duranate^{®} 24A-100 (von Asahi Kasei); HDI-Isocyanurate, beispielsweise als Desmodur^{®} N 3300, N 3600 und N 3790 BA (alle von Bayer), Tolonate^{®} HDT, HDT-LV und HDT-LV2 (von Rhodia), Duranate^{®} TPA-100 und THA-100 (von Asahi Kasei) und Coronate^{®} HX (von Nippon Polyurethane); HDI-Uretdione, beispielsweise als Desmodur^{®} N 3400 (von Bayer); HDI-Iminooxadiazindione, beispielsweise als Desmodur-e XP 2410 (von Bayer); HDI-Allophanate, beispielsweise als Desmodur^{®} VP LS 2102 (von Bayer); IPDI-Isocyanurate, beispielsweise in Lösung als Desmodur^{®} Z 4470 (von Bayer) oder in fester Form als Vestanat^{®} T1890/100 (von Degussa); TDI-Oligomere, beispielsweise als Desmodur^{®} IL (von Bayer); sowie gemischte Isocyanurate auf Basis TDI / HDI, zum Beispiel als Desmodur^{®} HL (von Bayer). Weiterhin besonders geeeignet sind bei Raumtemperatur flüssige Formen von MDI (sogenanntes "modifiziertes MDI"), welche Gemische von MDI mit MDI-Derivaten, wie beispielsweise MDI-Carbodiimiden bzw. MDI-Uretoniminen oder MDI-Urethanen darstellen, bekannt beispielsweise unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20 und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF).

Die vorgenannten oligomeren Polyisocyanate **PI** stellen in der Praxis üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid-, Uretonimin- oder Oxadiazintrion-Gruppen. Bevorzugt weisen diese Oligomere einen niedrigen Gehalt an monomeren Diisocyanaten auf.

Als Polyisocyanat **PI** bevorzugt sind bei Raumtemperatur flüssige Formen von MDI, sowie die Oligomeren von HDI, IPDI und TDI, insbesondere die Isocyanurate und die Biurete.

In einer weiteren Ausführungsform ist das Polyisocyanat **P** eine Mischung bestehend aus mindestens einem Polyurethanpolymer **PUP** und mindestens einem Polyisocyanat **PI,** wie sie vorgängig beschrieben wurden.

Die härtbare Zusammensetzung kann als einkomponentige oder als zweikomponentige Zusammensetzung vorliegen.

In einer bevorzugten Ausführungsform ist die härtbare Zusammensetzung einkomponentig.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen längeren Zeitraum lagerstabil ist, sich also in ihren Anwendungs- oder Gebrauchseigenschaften durch die Lagerung nicht oder nur unwesentlich verändert, und welche nach der Applikation durch die Einwirkung von Feuchtigkeit aushärtet.

In einer einkomponentigen Zusammensetzung liegt das Carbonsäurehydrazid bevorzugt in Form eines Polycarbonsäurehydrazids **HY** vor, wie es vorgängig beschrieben wurde, und ist insbesondere ausgewählt aus der Gruppe bestehend aus Oxalsäuredihydrazid, Adipinsäuredihydrazid, Azelainsäuredihydrazid, Sebacinsäuredihydrazid und Isophthalsäuredihydrazid.

Polycarbonsäurehydrazide **HY** sind besonders geeignet als Bestandteil einer einkomponentigen Zusammensetzung, da sie mit Isocyanatgruppen bei Temperaturen bis etwa 60 °C nicht reagieren und solche einkomponentige Zusammensetzungen deshalb eine gute Lagerstabilität aufweisen. Carbonsäurehydrazide mit einem tieferen Schmelzpunkt können schon bei tieferen Temperaturen mit Isocyanatgruppen reagieren, was bei der Lagerung einer entsprechenden einkomponentigen Zusammensetzung zu einem starken Viskositätsanstieg und schliesslich zum Gelieren führen kann. Auch Monocarbonsäurehydrazide mit einem Schmelzpunkt im Bereich von 160 °C bis 260 °C können beim Lagern schon bei tieferen Temperaturen mit Isocyanatgruppen reagieren. Dies rührt vermutlich daher, dass die Löslichkeit von Monocarbonsäurehydraziden in der Zusammensetzung im Allgemeinen höher ist als diejenige von Polycarbonsäurehydraziden mit einem vergleichbaren Schmelzpunkt, und die Monocarbonsäurehydrazide dadurch trotz ihres hohen Schmelzpunktes bereits bei tieferen Temperaturen als Reaktionspartner für Isocyanatgruppen verfügbar sind.

In einer einkomponentigen Zusammensetzung liegt das Polyisocyanat **P** bevorzugt als Isocyanatgruppen aufweisendes Polyurethanpolymer **PUP** vor.

In der einkomponentigen Zusammensetzung ist das Polyisocyanat **P** üblicherweise in einer Menge von 5 bis 95 Gewichts-%, bevorzugt in einer Menge von 10 bis 90 Gewichts-%, bezogen auf die gesamte Zusammensetzung, vorhanden. In gefüllten Zusammensetzungen, d.h. Zusammensetzungen, welche einen Füllstoff enthalten, ist das Polyisocyanat **P** bevorzugt in einer Menge von 5 bis 60 Gewichts-%, insbesondere 10 bis 50 Gewichts-%, bezogen auf die gesamte Zusammensetzung, vorhanden.

Gegebenenfalls enthält die einkomponentige Zusammensetzung sogenannte latente Härter in Form von blockierten, hydrolytisch aktivierbaren Aminen, insbesondere Substanzen mit Oxazolidino- oder Aldiminogruppen. Insbesondere geeignet sind Kondensationsprodukte von primären aliphatischen Polyaminen, wie sie üblicherweise als Bestandteil von zweikomponentigen Polyurethanzusammensetzungen verwendet werden, mit geeigneten Aldehyden. Besonders geeignet sind Polyaldimine mit Aldiminogruppen, welche am in a-Stellung zur Carbonylgruppe stehenden C-Atom kein Wasserstoffatom tragen und deshalb nicht zu Enaminogruppen tautomerisieren können. Solche Aldiminogruppen stellen besonders gut geschützte ("blockierte") primäre Aminogruppen dar, welche unter Ausschluss von Feuchtigkeit mit Isocyanatgruppen keine oder nur äusserst geringe Reaktivität zeigen und deshalb zusammen mit freien Isocyanatgruppen im Allgemeinen besonders gut lagerfähig sind. Kommen solche latente Härter in Anwesenheit von Isocyanatgruppen mit Feuchtigkeit in Kontakt, so reagieren sie unter Hydrolyse und Freisetzung von Aldehyden mit Isocyanatgruppen zu Harnstoffgruppen. Ebenfalls besonders geeignet sind latente Härter, welche bei ihrer Hydrolyse geruchsarme oder geruchsfreie, schwerflüchtige Aldehyde wie beispielsweise 2,2-Dimethyl-3-lauroyloxy-propanal freisetzen. Ausgehend von solchen latenten Härtern sind einkomponentige Polyurethanklebstoffe zugänglich, welche schnell, ohne Balsenbildung und geruchsarm oder geruchsfrei aushärten, was für viele Anwendungen, insbesondere in Innenräumen, ein grosser Vorteil ist.

Gegebenenfalls enthält die einkomponentige Zusammensetzung weitere Bestandteile, insbesondere in Polyurethanzusammensetzungen üblicherweise eingesetzten Hilfs- und Zusatzstoffe, beispielsweise die folgenden:
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate und Sebacate, organische Phosphor- und Sulfonsäureester oder Polybutene;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (BaSO₄, auch Schwerspat genannt), Quarzmehle, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellte Russe (im Folgenden als "Russ" bezeichnet), PVC-Pulver oder Hohlkugeln,
- Fasern, beispielsweise aus Polyethylen;
- Pigmente, beispielsweise Titandioxid oder Eisenoxide;
- Katalysatoren, insbesondere Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismut-tris(neodecanoat); tertiäre Aminogruppen enthaltende Verbindungen, insbesondere 2,2'-Dimorpholinodiethylether und 1,4-Diazabicyclo[2.2.2]octan; und Säuren, insbesondere Benzoesäure, Salicylsäure oder 2-Nitrobenzoesäure;
- Rheologie-Modifizierer wie insbesondere Verdickungsmittel oder Thixotropiermittel, zum Beispiel Harnstoffverbindungen, Polyamidwachse, Bentonite oder pyrogene Kieselsäuren;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane ("Silane") wie beispielsweise Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie insbesondere Netzmittel, Verlaufsmittel, Entlüftungsmittel oder Entschäumer;
- Biozide wie beispielsweise Algizide, Fungizide oder das Pilzwachstum hemmende Substanzen.

Gegebenenfalls enthält die einkomponentige Zusammensetzung weiterhin ein Material, welches die Wärmeleitfähigkeit der Zusammensetzung erhöht und/oder es aufgrund seiner piezoelektrischen, ferromagnetischen oder superparamagnetischen Eigenschaften erlaubt, die Zusammensetzung durch Anlegen von magnetischen und/oder elektrischen Wechselfeldern, insbesondere Mikrowellen, Induktion oder NIR, zu erwärmen. Dies erlaubt es, die Zusammensetzung, welche im allgemeinen eine eingeschränkte Wärmeleitfähigkeit aufweist, schneller zu erwärmen und somit eine Klebeverbindung umfassend die ausgehärtete Zusammensetzung, bzw. den ausgehärteten Polyurethanklebstoff, schneller zu entkleben. Als derartiges Material geeignet sind insbesondere Graphit, leitfähige Russe und Metallpulver; Piezoelektrika wie Quarz, Turmalin, Bariumtitanat, Lithiumsulfat, Kalium(Natrium)tartrat, Ethylendiamintartrat und Blei-Zirkonium-Titanat; Ferromagnetika oder Superparamagnetika wie die Metalle Aluminium, Kobalt, Eisen, Nickel und deren Legierungen, Metalloxide vom Typ n-Maghemit (γ-Fe₂O₃), n-Magnetit (Fe₃O₄), sowie Ferrite der allgemeinen Formel MFe₂O₄, wobei M für zweiwertige Metalle aus der Gruppe Kupfer, Zink, Kobalt, Nickel, Magnesium, Calcium oder Cadmium steht. Bevorzugt liegt dieses Material feinteilig vor, wobei der mittlere Teilchendurchmesser unter 120 µm, insbesondere unter 50 µm, liegt. Für die Ausnutzung des superparamagnetischen Effekts liegt der mittlere Teilchendurchmesser bevorzugt unter 50 nm, insbesondere unter 30 nm.

Es ist vorteilhaft, beim Einsatz solcher weiterer Bestandteile darauf zu achten, dass diese die Löslichkeit des Carbonsäurehydrazids, insbesondere eines Polycarbonsäurehydrazids **HY,** in der Zusammensetzung nicht über Gebühr erhöhen.

Weiterhin ist es vorteilhaft, beim Einsatz solcher weiteren Bestandteile darauf zu achten, dass diese die Lagerstabilität der einkomponentigen Zusammensetzung nicht stark beeinträchtigen. Das heisst, dass diese Bestandteile während der Lagerung die zur Vernetzung führenden Reaktionen nicht in signifikantem Ausmass auslösen dürfen. Insbesondere bedeutet dies, dass all diese Bestandteile kein oder höchstens Spuren von Wasser enthalten sollten. Es kann sinnvoll sein, gewisse Bestandteile vor dem Einmischen in die Zusammensetzung chemisch oder physikalisch zu trocknen.

Bevorzugt enthält die einkomponentige Zusammensetzung mindestens einen Katalysator.

Die einkomponentige Zusammensetzung wird unter Ausschluss von Feuchtigkeit hergestellt und aufbewahrt. Sie ist lagerstabil, d.h. sie kann unter Ausschluss von Feuchtigkeit in einer geeigneten Verpackung oder Anordnung, wie beispielsweise einem Fass, einem Eimer, einem Beutel, einer Kartusche oder einer Flasche über einen Zeitraum von beispielsweise mehreren Monaten aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Die für die Aushärtung benötigte Feuchtigkeit kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

In einer weiteren Ausführungsform ist die härtbare Zusammensetzung zweikomponentig.

Als "zweikomponentig" wird im vorliegenden Dokument eine härtbare Zusammensetzung bezeichnet, bei welcher die Bestandteile der Zusammensetzung in zwei voneinander getrennten Komponenten vorliegen, welche jeweils in einem eigenen Gebinde lagerstabil gelagert werden können. Erst kurz vor oder während der Applikation der Zusammensetzung werden die beiden Komponenten miteinander vermischt, worauf die vermischte Zusammensetzung, gegebenenfalls unter Mitwirkung von Feuchtigkeit, aushärtet.

Die zweikomponentige Zusammensetzung besteht aus einer ersten Komponente **K1** und einer zweiten Komponente **K2,** wobei die erste Komponente **K1** das Polyisocyanat **P** enthält und die zweite Komponente **K2** ein Polyol und/oder ein Polythiol und/oder ein Polyamin enthält. Das Carbonsäurehydrazid kann in der Komponente **K1** und/oder in der Komponente **K2** enthalten sein. Bevorzugt ist das Carbonsäurehydrazid ein Bestandteil der Komponente **K2.**

In einer zweikomponentigen Zusammensetzung weist das Carbonsäurehydrazid bevorzugt einen Schmelzpunkt im Bereich von 160 °C bis 260 °C auf.

Liegt das Carbonsäurehydrazid in Form eines Monocarbonsäurehydrazids vor, so ist dieses insbesondere geeignet als Bestandteil der Komponente **K2.**

Besonders bevorzugt liegt das Carbonsäurehydrazid in Form eines Polycarbonsäurehydrazids **HY** vor, wie es vorgängig beschrieben wurde, und ist insbesondere ausgewählt aus der Gruppe bestehend aus Oxalsäuredihydrazid, Adipinsäuredihydrazid, Azelainsäuredihydrazid, Sebacinsäuredihydrazid und Isophthalsäuredihydrazid.

In der zweikomponentigen Zusammensetzung liegt das Polyisocyanat **P** bevorzugt als Polyisocyanat **PI,** wie es vorgängig beschrieben wurde, vor.

Als Polyol in der Komponente **K2** geeignet sind dieselben Polyole, die bereits vorgängig für die Herstellung einer Polyurethanpolymers **PUP** genannt wurden, sowie die bereits vorgängig zur Mitverwendung bei der Herstellung eines Polyurethanpolymers **PUP** genannten niedrigmolekularen zwei- oder mehrwertigen Alkohole.

Als Polythiol in der Komponente **K2** geeignet sind beispielsweise unter dem Markennamen Thiokol^{®} bekannte flüssige Mercapto-terminierte Polymere, insbesondere die Typen LP-3, LP-33, LP-980, LP-23, LP-55, LP-56, LP-12, LP-31, LP-32 und LP-2 (Morton Thiokol; beispielsweise erhältlich von SPI Supplies, USA, oder von Toray Fine Chemicals, Japan), sowie Polyester von Thiocarbonsäuren, insbesondere Pentaerythritoltetramercaptoacetat, Trimethylolpropantrimercaptoacetat, Glykoldimercaptoacetat, Pentaerythritol-tetra-(3-mercaptopropionat), Trimethylolpropantri-(3-mercaptopropionat) und Glykoldi-(3-mercaptopropionat).

Als Polyamin in der Komponente **K2** geeignet sind üblicherweise als Härter für Isocyanate verwendete Amine, insbesondere
- primäre aliphatische Polyamine wie beispielsweise 1,3-Pentandiamin (DAMP), 1,5-Diamino-2-methylpentan (MPMD), 1,6-Hexamethylendiamin, 2,2,4- und 2,4,4-Trimethylhexamethylendiamin (TMD), 1-Amino-3-aminomethyl-3,5,5-trimethylcyclohexan (= Isophorondiamin oder IPDA), 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan (TMCDA) und 4-Aminomethyl-1,8-octandiamin;
- Ethergruppenhaltige aliphatische Diamine wie beispielsweise 3,6-Dioxaoctan-1,8-diamin, 4,7-Dioxadecan-1,10-diamin und Polyoxyalkylendi- und -tiamine, welche typischerweise Produkte aus der Aminierung von Polyoxyalkylen-Diolen darstellen, insbesondere die unter dem Handelsnamen Jeffamine^{®} erhältlichen Typen D-230, D-400, D-2000, T-403 und T-5000 von Huntsman und dazu analoge Verbindungen von BASF oder Nitroil;
- sekundäre aliphatische Polyamine wie beispielsweise N,N'-Dibutyl-ethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, N-alkylierte Polyetheramine, beispielsweise die Jeff-amine^{®}-Typen SD-231, SD-401, SD-404 und SD-2001 von Huntsman, Produkte aus der Michael-artigen Addition von primären aliphatischen Polyaminen an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd;
- aliphatische Polyamine mit primären und sekundären Aminogruppen wie beispielsweise N-Cyclohexyl-1,3-propandiamin, N-Butyl-1,6-hexandiamin, 4-Aminomethyl-piperidin, 3-(4-Aminobutyl)-piperidin, Diethylentriamin (DETA), Dipropylentriamin (DPTA), Bis-hexamethylentriamin (BHMT) und Fettdiamine wie N-Cocoalkyl-1,3-propandiamin, N-Oleyl-1,3-propandiamin, N-Soyaalkyl-1,3-propandiamin und N-Talgalkyl-1,3-propandiamin und Umsetzungsprodukte aus der Michael-artigen Additionsreaktion von aliphatischen primären Diaminen mit den bereits genannten Michael-Akzeptoren im Molverhältnis 1:1;
- primäre und/oder sekundäre aromatische Polyamine wie beispielsweise mund p-Phenylendiamin, 4,4'-, 2,4' und 2,2'-Diaminodiphenylmethan, 3,3'-Dichloro-4,4'-diaminodiphenylmethan (MOCA), 2,4- und 2,6-Toluylendiamin, Mischungen von 3,5-Dimethylthio-2,4- und -2,6-toluylendiamin (erhältlich als Ethacure^{®} 300 von Albemarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)-benzolsulfonamid, 5,5'-Methylendianthranilsäure, Dimethyl-(5,5'-Methylendianthranilat), 1,3-Propylen-bis-(4-aminobenzoat), 1,4-Butylen-bis-(4-aminobenzoat), Poly-tetramethylenoxid-bis-(4-aminobenzoat) (erhältlich als Versalink^{®} von Air Products), 1,2-Bis-(2-aminophenylthio)-ethan, N,N'-Dialkyl-p-phenylendiamin, N,N'-Dialkyl-4,4'-diaminodiphenylmethan, 2-Methylpropyl-(4-chloro-3,5-diaminobenzoat) und tert.Butyl-(4-chloro-3,5-diaminobenzoat).

Als Bestandteil der Komponente **K2** weiterhin geeignet sind Aminoalkohole, insbesondere 2-(Methylamino)ethanol, 2-(Ethylamino)ethanol, 2-(Butylamino)ethanol, 2-(Cyclohexylamino)ethanol, 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin, 3-(6-Hydroxyhexyloxy)-propylamin, Diethanolamin, Diisopropanolamin, 3-Methyl-amino-1,2-propandiol, 2-(Methylamino)ethanol, 2-(Ethylamino)ethanol, 2-(Butylamino)ethanol und 2-(Cyclohexylamino)ethanol, 3-Pyrrolidinol, 3- oder 4-Hydroxy-piperidin, 2-Piperidin-ethanol, 2-[2-(1-piperazyl)]ethanol, 2-[2-(1-Piperazyl)ethoxy]ethanol und N-Hydroxyethylanilin.

Als Bestandteil der Komponente **K2** weiterhin geeignet sind blockierte, hydrolytisch aktivierbare Amine mit Enamino-, Oxazolidino-, Aldimino- und/oder Ketiminogruppen, insbesondere Kondensationsprodukte der vorgenannten Polyamine oder Aminoalkohole mit geeigneten Aldehyden oder Ketonen.

Bevorzugt enthält die Komponente **K2** mindestens ein Polyol mit einem mittleren Molekulargewicht von 250 bis 30'000 g/mol, insbesondere von 400 bis 20'000 g/mol, und einer mittleren OH-Funktionalität im Bereich von 1.6 bis 3.0.

Gegebenenfalls enthält die zweikomponentige Zusammensetzung weitere Bestandteile, insbesondere in Polyurethanzusammensetzungen üblicherweise eingesetzten Hilfs- und Zusatzstoffe, wie bereits als Bestandteil einer einkomponentigen Zusammensetzung erwähnt, sowie ein Material, welches die Wärmeleitfähigkeit der Zusammensetzung erhöht und/oder piezoelektrische, ferromagnetische oder superparamagnetische Eigenschaften aufweist, wie ebenfalls bereits als Bestandteil einer einkomponentigen Zusammensetzung erwähnt. Solche weitere Bestandteile können als Bestandteil der ersten Komponente **K1** oder als Bestandteil der zweiten Komponente **K2** vorhanden sein.

Als Bestandteil der Komponente **K2** sind neben den genannten noch weitere Hilfs- und Zusatzstoffe möglich, und zwar solche, die zusammen mit freien Isocyanatgruppen nicht oder nur kurzzeitig lagerfähig sind. Insbesondere können weitere Katalysatoren vorhanden sein, insbesondere Verbindungen von Zink, Mangan, Eisen, Chrom, Cobalt, Kupfer, Nickel, Molybdän, Blei, Cadmium, Quecksilber, Antimon, Vanadium, Titan, Zirconium oder Kalium, wie Zink(II)-acetat, Zink(II)-2-ethylhexanoat, Zink(II)-laurat, Zink(11)-acetylacetonat, Eisen(III)-2-ethylhexanoat, Cobalt(II)-2-ethylhexanoat, Kupfer(II)-2-ethylhexanoat, Nickel(11)-naphthenat, Aluminiumlactat, Aluminiumoleat, Diisopropoxytitan-bis-(ethylacetoacetat), Kaliumacetat; tertiäre Amine wie N-Ethyl-diisopropylamin, N,N,N',N'-Tetramethyl-alkylendiamine, Pentamethyl-alkylentriamine und höhere Homologe davon, Bis-(N,N-diethylaminoethyl)-adipat, Tris-(3-dimethylaminopropyl)-amin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Alkylmorpholine, N,N'-Dimethylpiperazin, stickstoffaromatische Verbindungen wie 4-Dimethylamino-pyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und tertiären Aminen.

Es ist vorteilhaft, beim Einsatz solcher weiterer Bestandteile darauf zu achten, dass diese die Löslichkeit des Carbonsäurehydrazids in der Zusammensetzung nicht über Gebühr erhöhen.

Die Herstellung der beiden Komponenten **K1** und **K2** erfolgt getrennt voneinander und, zumindest für die Komponente **K1,** unter Ausschluss von Feuchtigkeit. Die beiden Komponenten **K1** und **K2** sind getrennt voneinander lagerstabil, d.h. sie können jede in einer geeigneten Verpackung oder Anordnung, wie beispielsweise einem Fass, einem Beutel, einem Eimer, einer Kartusche oder einer Flasche, vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Kurz vor oder während der Applikation der zweikomponentigen Zusammensetzung werden die beiden Komponenten **K1** und **K2** miteinander vermischt, wobei zum Vermischen insbesondere ein Statikmischer oder ein dynamischer Mischer eingesetzt wird und das Vermischen kontinuierlich oder batchweise erfolgen kann.

Die vermischte zweikomponentige Zusammensetzung härtet aus, indem in der Zusammensetzung vorhandene Hydroxyl-, Mercapto-, Amino- und hydrolysierende blockierte Aminogruppen mit vorhandenen Isocyanatgruppen reagieren. Überschüssige Isocyanatgruppen reagieren mit Feuchtigkeit.

Die härtbare Zusammensetzung liegt bevorzugt in Form einer einkomponentigen Zusammensetzung vor.

Ein weiterer Gegenstand der vorliegenden Erfindung ist eine härtbare Zusammensetzung umfassend
a) mindestens ein Polyisocyanat **P,** und
β) mindestens ein Carbonsäurehydrazid,
   mit der Massgabe, dass das Verhältnis (n_{HY} - n_{AK}) / n_{NCO} einen Wert von 0.2 bis 3, insbesondere von 0.5 bis 2, aufweist,
wobei n_{HY} für die Anzahl der in der Zusammensetzung vorhandenen Hydrazidgruppen steht,
n_{AK} für die Anzahl der in der Zusammensetzung freisetzbaren und vorhandenen Aldehyd- und Ketogruppen steht; und
n_{NCO} für die Anzahl der in der Zusammensetzung vorhandenen Isocyanatgruppen steht.

Das Carbonsäurehydrazid und das Polyisocyanat **P** liegen in der härtbaren Zusammensetzung in Form der vorgängig beschriebenen Carbonsäurehydrazide bzw. der vorgängig beschriebenen Polyisocyanate **P** und deren bevorzugten Ausführungsformen vor.

Das in der härtbaren Zusammensetzung enthaltene Carbonsäurehydrazid weist bevorzugt einen Schmelzpunkt im Bereich von 160 °C bis 260 °C, insbesondere von 175 °C bis 240 °C, auf.

Bevorzugt ist das in der härtbaren Zusammensetzung enthaltene Carbonsäurehydrazid ein Polycarbonsäurehydrazid **HY,** welches insbesondere ausgewählt ist aus der Gruppe bestehend aus Oxalsäuredihydrazid, Adipinsäuredihydrazid, Azelainsäuredihydrazid, Sebacinsäuredihydrazid und Isophthalsäuredihydrazid.

Es ist ein wesentlicher Aspekt der vorliegenden Erfindung, dass das Carbonsäurehydrazid bei der Aushärtung der härtbaren Zusammensetzung nicht als Härter wirkt, sondern bei der Aushärtung in freier Form in der ausgehärteten Zusammensetzung, bzw. im ausgehärteten Polyurethanklebstoff, verbleibt.

Bei der Aushärtung einer der beschriebenen härtbaren Zusammensetzungen bei einer genügend tiefen Temperatur entsteht ein ausgehärteter Polyurethanklebstoff enthaltend das Carbonsäurehydrazid. Die maximal zulässige Temperatur hängt insbesondere ab vom Schmelzpunkt des vorhandenen Carbonsäurehydrazids.

Eine ausgehärtete Zusammensetzung enthaltend mindestens ein Carbonsäurehydrazid wird insbesondere erhalten durch die Aushärtung einer der beschriebenen härtbaren Zusammensetzungen bei einer Temperatur unterhalb von 80 °C, insbesondere unterhalb von 60 °C.

Ein weiterer Gegenstand der vorliegenden Erfindung ist ein Verfahren zum Entkleben einer Klebeverbindung umfassend den Schritt des Erhitzens eines ausgehärteten, ein Carbonsäurehydrazid enthaltenden Polyurethanklebstoffs auf eine Entklebungstemperatur von mindestens 80 °C.

In diesem Verfahren liegen das Carbonsäurehydrazid bzw. der ausgehärtete Polyurethan klebstoff in Form der vorgängig beschriebenen Carbonsäurehydrazide bzw. Polyurethanklebstoffe und deren bevorzugten Ausführungsformen vor.

Die Entklebungstemperatur liegt bevorzugt oberhalb von 100 °C, insbesondere im Bereich von 120 °C bis 240 °C.

Am meisten bevorzugt liegt die Entklebungstemperatur im Bereich von 140 °C bis 220 °C.

Eine Klebeverbindung umfassend einen ausgehärteten Polyurethanklebstoff, welcher mindestens ein Carbonsäurehydrazid enthält, ist insbesondere erhältlich aus einem Verfahren zum Verkleben von einem Substrat **S1** mit einem Substrat **S2,** wobei dieses Verfahren die Schritte umfasst:
i) Applikation einer härtbaren Zusammensetzung, wie sie vorgängig beschrieben wurde, auf ein Substrat **S1;**
ii) Kontaktieren der applizierten Zusammensetzung mit einem Substrat **S2** innerhalb der Offenzeit der Zusammensetzung;
oder
i') Applikation einer härtbaren Zusammensetzung, wie sie vorgängig beschrieben wurde, auf ein Substrat **S2;**
ii') Kontaktieren der applizierten Zusammensetzung mit einem Substrat **S1** innerhalb der Offenzeit der Zusammensetzung;
oder
i") Applikation einer härtbaren Zusammensetzung, wie sie vorgängig beschrieben wurde, auf ein Substrat **S1** und auf ein Substrat **S2;**
ii") Kontaktieren der applizierten Zusammensetzung miteinander innerhalb der Offenzeit der Zusammensetzung;
wobei das Substrat **S2** aus dem gleichen oder einem unterschiedlichen Material wie das Substrat **S1** besteht;
und wobei diese Schritte und die Aushärtung der härtbaren Zusammensetzung bei Temperaturen unterhalb von 80 °C, insbesondere unterhalb von 60 °C, erfolgen.

Für den Fall, dass die härtbare Zusammensetzung eine zweikomponentige Zusammensetzung ist, werden die beiden Komponenten vor der Applikation der Zusammensetzung miteinander vermischt.

Als "Offenzeit" wird in diesem Dokument die Zeit bezeichnet, während der eine einkomponentige Zusammensetzung verarbeitet werden kann, nachdem die Isocyanatgruppen des Polyisocyanats mit Feuchtigkeit in Kontakt gekommen sind, oder während der eine zweikomponentige Zusammensetzung verarbeitet werden kann, nachdem die beiden Komponenten miteinander vermischt wurden.

In diesen Verfahren sind geeignete Substrate **S1** und/oder **S2** insbesondere
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites;
- Kunststoffe wie Polyvinylchlorid (Hart- und Weich-PVC), AcrylonitrilButadien-Styrol-Copolymere (ABS), SMC (Sheet Moulding Compounds), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Die Substrate können bei Bedarf vor dem Applizieren der härtbaren Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Ein weiterer Gegenstand der vorliegenden Erfindung ist ein Verbundkörper, aufweisend ein Substrat **S1,** ein Substrat **S2** und einen sich zwischen Substrat **S1** und Substrat **S2** befindlichen ausgehärteten Polyurethanklebstoff enthaltend mindestens ein Carbonsäurehydrazid, welcher Substrat **S1** und Substrat **S2** miteinander verklebt.

In diesem Verbundkörper liegen das Substrat **S1** und das Substrat **S2,** bzw. das Carbonsäurehydrazid, bzw. der ausgehärtete Polyurethanklebstoff in Form der vorgängig beschriebenen Substrate, bzw. Carbonsäurehydrazide, bzw. Polyurethanklebstoffe und deren bevorzugten Ausführungsformen vor.

Ein solcher Verbundkörper ist insbesondere erhältlich aus dem beschriebenen Verfahren zum Verkleben von einem Substrat **S1** mit einem Substrat **S2.**

Eine Klebeverbindung, wie sie vorgängig beschrieben wurde, wird entklebt, indem der ausgehärtete Polyurethan klebstoff enthaltend mindestens ein Carbonsäurehydrazid auf eine Temperatur von mindestens 80 °C, insbesondere oberhalb von 100 °C, erhitzt wird. Die dafür notwendige Wärme kann mit jeder beliebigen Energiequelle erzeugt werden. Geeignete Mittel zur Erwärmung sind insbesondere Umluftöfen, Heissluftgebläse oder Infrarotstrahler. Falls mindestens eines der Substrate ferromagnetisch ist und/oder die Zusammensetzung ein piezoelektrisches, ferromagnetisches oder superparamagnetisches Material enthält, kann die Erhitzung auch durch Anlegen von magnetischen und/oder elektrischen Wechselfeldern, insbesondere Mikrowellen oder Induktion, erfolgen; dies erlaubt ein besonders rasches Erhitzen des ausgehärteten Polyurethanklebstoffs. Durch das Erhitzen wird das Polyurethanpolymer des Polyurethanklebstoffs thermisch abgebaut, wobei dieser thermische Abbau vermutlich überwiegend durch das im Klebstoff vorhandene Carbonsäurehydrazid und dessen Reaktionen mit dem Polyurethanpolymer initiiert wird. Dadurch wird der Klebstoff in Bezug auf dessen Festigkeit geschwächt und die Klebeverbindung schliesslich entklebt, so dass das Substrat **S1** und das Substrat **S2** mit relativ geringem Kraftaufwand voneinander getrennt werden können.

Eine höhere Entklebungstemperatur bewirkt einen schnelleren thermischen Abbau des Polyurethanpolymers und somit ein schnelleres Entkleben der Klebeverbindung. Eine tiefere Entklebungstemperatur muss also über einen längeren Zeitraum aufrechterhalten werden als eine höhere Entklebungstemperatur, um eine Klebeverbindung zu entkleben. Entklebungstemperaturen oberhalb von etwa 250 °C werden vorteilhaft nur sehr kurz oder gar nicht verwendet, da dabei toxische Gase aus dem Polyurethanpolymer freigesetzt werden können, was spezielle Schutzausrüstungen erfordert und deshalb unerwünscht ist.

Die vorliegende Erfindung zum Entkleben einer Klebeverbindung ist vorteilhaft anwendbar für Verklebungen an industriellen Gütern, insbesondere für die Montage von Haushaltgeräten, Automobilen, Transportfahrzeugen oder Schiffen. Weiterhin anwendbar ist sie für Verklebungen im Bau, beispielsweise für das Ankleben von Platten oder Paneelen an Fassaden.

Klebeverbindungen, welche thermisch entklebt werden können, sind insbesondere vorteilhaft für die Reparatur eines Verbundkörpers. Muss ein angeklebtes Bauteil ersetzt werden, kann es von grossem Vorteil sein, wenn die Klebeverbindung auf einfache Weise thermisch entklebt werden kann, insbesondere wenn die Klebeverbindung aus einem Polyurethanklebstoff mit einer sehr hohen Festigkeit besteht. So muss der Klebstoff nicht mit viel Aufwand mechanisch zerstört werden, sondern er braucht nur genügend erhitzt zu werden, so dass beispielsweise ein defektes, geklebtes Bauteil eines Automobils ersetzt werden kann. Das defekte Bauteil kann nach dem Erhitzen mit geringem Kraftaufwand entfernt werden und allfällige Klebstoffreste von der Karrosserie entfernt werden. Diese Klebstoffreste bestehen aus thermisch abgebautem Polyurethanklebstoff und weisen deshalb kaum Festigkeit auf, sondern sind weitgehend pastös. Dadurch lassen sie sich auf einfache Weise, beispielsweise mittels einem Spatel, entfernen, worauf die Karrosserie nach einer kurzen Reinigung mit etwas Lösemittel bereit ist für das Ankleben eines neuen Bauteils mittels eines Reparaturklebstoffs.

Klebeverbindungen, welche thermisch entklebt werden können, sind weiterhin vorteilhaft für den Fall, dass die verklebten Bauteile verwertet oder dem Recycling zugeführt werden sollen.

Ein weiterer Gegenstand der vorliegenden Erfindung ist ein Reparaturverfahren umfassend die Schritte:
a) Erhitzen eines ausgehärteten Polyurethanklebstoffs eines Verbundkörpers,
   aufweisend ein Substrat **S1,** ein Substrat **S2** und einen sich zwischen Substrat **S1** und Substrat **S2** befindlichen ausgehärteten Polyurethanklebstoff enthaltend mindestens ein Carbonsäurehydrazid,
   auf eine Temperatur von mindestens 80 °C, bevorzugt oberhalb von 100 °C, insbesondere auf eine Temperatur im Bereich von 120 °C bis 240 °C, unter Entkleben der Klebverbindung infolge des durch Hitze initiierten termischen Abbaus des ausgehärteten Polyurethanklebstoffs;
b) anschliessendes Entfernen des Substrats **S2** vom Verbundkörper;
c) anschliessendes Entfernen von allenfalls auf Substrat **S1** verbliebenen Resten des thermisch abgebauten Polyurethanklebstoffs;
d) gegebenenfalls anschliessendes Reinigen und/oder Vorbehandeln des Substrats **S1;**
   sowie entweder die Schritte e) und f) oder die Schritte e') und f'):
e) an Schritt c) oder d) anschliessendes Applizieren eines Reparaturklebstoffs auf das Substrat **S1;** und
f) Kontaktieren des Reparaturklebstoffs mit einem Substrat **S2';**
e') an Schritt c) oder d) anschliessendes Applizieren eines Reparaturklebstoffs auf ein Substrat **S2';** und
f) Kontaktieren des Reparaturklebstoffs mit dem Substrat **S1.**

In diesem Reparaturverfahren liegen die Substrate **S1, S2** und **S2',** bzw. das Carbonsäurehydrazid, bzw. der ausgehärtete Polyurethanklebstoff in Form der vorgängig beschriebenen Substrate, bzw. Carbonsäurehydrazide, bzw. Polyurethanklebstoffe und deren bevorzugten Ausführungsformen vor.

Das Substrat **S2'** ist vor dem Kontaktieren mit dem Reparaturklebstoff gegebenenfalls vorbehandelt, wie vorgängig für ein Substrat **S1** und **S2** beschrieben.

Als Reparaturklebstoff geeignet sind insbesondere ein- oder zweikomponentige Polyurethanklebstoffe, beispielsweise härtbare Zusammensetzungen, wie sie vorgängig beschrieben wurden. Besonders geeignete Reparaturklebstoffe sind ein- und zweikomponentige Polyurethanklebstoffe, wie sie von Sika Schweiz AG unter den Handelsnamen Sikaflex^{®} und Sikaforce^{®} kommerziell vertrieben werden. Es ist für den Fachmann klar, dass als Reparaturklebstoff auch eine vorgängig beschriebene härtbare Zusammensetzung umfassend mindestens ein Polyisocyanat und mindestens ein Carbonsäurehydrazid verwendet werden kann. In diesem Fall kann das beschriebene Reparaturverfahren bei Bedarf erneut durchgeführt werden.

Die Verwendung eines Carbonsäurehydrazids zum Entkleben einer Klebeverbindung umfassend einen Polyurethanklebstoff durch Erhitzen weist verschiedene Vorteile auf. Carbonsäurehydrazide sind im Allgemeinen bei Raumtemperatur feste, kristalline Substanzen mit einer geringen Löslichkeit im Polyurethanklebstoff. Dadurch ist es möglich, sie als Bestandteil einer härtbaren Polyurethanzusammensetzung bei der Herstellung einer Klebeverbindung zu verwenden, ohne dass sie bei der Aushärtung der Zusammensetzung ins Polyurethanpolymer eingebaut werden, unter der Voraussetzung, dass die Aushärtung bei einer genügend tiefen Temperatur erfolgt. Weiterhin weist der ausgehärtete Polyurethanklebstoff enthaltend ein Carbonsäurehydrazid im Wesentlichen dieselben Eigenschaften auf wie ein entsprechender ausgehärteter Polyurethan klebstoff ohne Carbonsäurehydrazid. Insbesondere die Haftungseigenschaften und teilweise auch die mechanischen Eigenschaften wie Zugfestigkeit, Elastizitätsmodul (E-Modul) und Dehnbarkeit werden kaum verändert durch die Anwesenheit des freien Carbonsäurehydrazids im Klebstoff, unter der Voraussetzung, dass die Gebrauchstemperatur der Klebeverbindung genügend tief ist.

Ein weiterer Vorteil bei der Verwendung eines Carbonsäurehydrazids zum Entkleben einer Klebeverbindung ist die Tatsache, dass die zum Entkleben notwendige Entklebungstemperatur nicht allzu hoch ist, und/oder dass sie nur über einen relativ kurzen Zeitraum aufrechterhalten werden muss, um das Entkleben zu bewirken. Dadurch werden die Substrate der zu entklebenden Klebeverbindung geschont. Es lassen sich damit insbesondere auch Verbundkörper enthaltend hitzeempfindliche Materialien, beispielsweise thermoplastische Polymere wie Polypropylen, entkleben.

Ein weiterer Vorteil bei der Verwendung eines Carbonsäurehydrazids zum Entkleben einer Klebeverbindung ist die Tatsache, dass es sich bei Carbonsäurehydraziden im Allgemeinen um mindergiftige Substanzen handelt, deren Vorhandensein in einem Polyurethan klebstoff kaum eine besondere Kennzeichnung des Klebstoffs zur Folge hat.

Die bevorzugten Carbonsäurehydrazide mit einem Schmelzpunkt im Bereich von 160 °C bis 260 °C, insbesondere 175 °C bis 240 °C, weisen zusätzliche Vorteile auf. Die Aushärtung einer entsprechenden härtbaren Zusammensetzung kann bei etwas höheren Temperaturen erfolgen, insbesondere bis gegen 80 °C, ohne dass das Carbonsäurehydrazid ins Polyurethanpolymer eingebaut wird. Weiterhin sind sie für etwas höhere Gebrauchstemperaturen der Klebeverbindung geeignet, beispielsweise bis zu Temperaturen im Bereich von etwa 60 °C bis 100 °C. Zum Entkleben solcher Klebeverbindungen liegt die Entklebungstemperatur vorteilhaft oberhalb von 100°C.

Die besonders bevorzugten Polycarbonsäurehydrazide **HY** mit einem Schmelzpunkt im Bereich von 160 °C bis 260 °C, insbesondere 175 °C bis 240 °C, weisen weitere Vorteile auf. Sie sind aufgrund ihrer speziell geringen Löslichkeit weitgehend unreaktiv gegenüber freien Isocyanatgruppen bei Temperaturen bis zu ungefähr 60 °C. Dadurch sind sie besonders geeignet als Bestandteil von einkomponentigen Polyurethanzusammensetzungen, welche vor ihrer Applikation über einen gewissen Zeitraum gelagert werden sollen. Aufgrund ihrer speziell geringen Löslichkeit in Polyurethanklebstoffen sind sie für höhere Gebrauchstemperaturen der Klebeverbindung geeignet, insbesondere für Gebrauchstemperaturen im Bereich von etwa 80 °C bis 100 °C.

Die Tatsache, dass einerseits Carbonsäurehydrazide als Bestandteil von lagerfähigen härtbaren Polyurethanzusammensetzungen verwendet werden können und daraus ausgehärtete Polyurethanklebstoffe enthaltend diese Carbonsäurehydrazide in freier, nicht eingebauter Form erhältlich sind, und dass andererseits diese ausgehärteten Klebstoffe bei praxistauglichen Gebrauchstemperaturen verwendet werden können, ohne dabei einen signifikanten Verlust an Festigkeit zu erleiden, und dass weiterhin die Entklebung solcher Klebstoffe in einem geeigneten Temperaturbereich in relativ kurzer Zeit möglich ist, ist überraschend und für den Fachmann nicht naheliegend.

### Kurze Beschreibung der Zeichnungen

Im Folgenden werden anhand der Zeichnungen Ausführungsbeispiele der Erfindung näher erläutert. Gleiche Elemente sind in den verschiedenen

Figuren mit den gleichen Bezugszeichen versehen. Bewegungen oder Einwirkungen sind mit Pfeilen dargestellt.

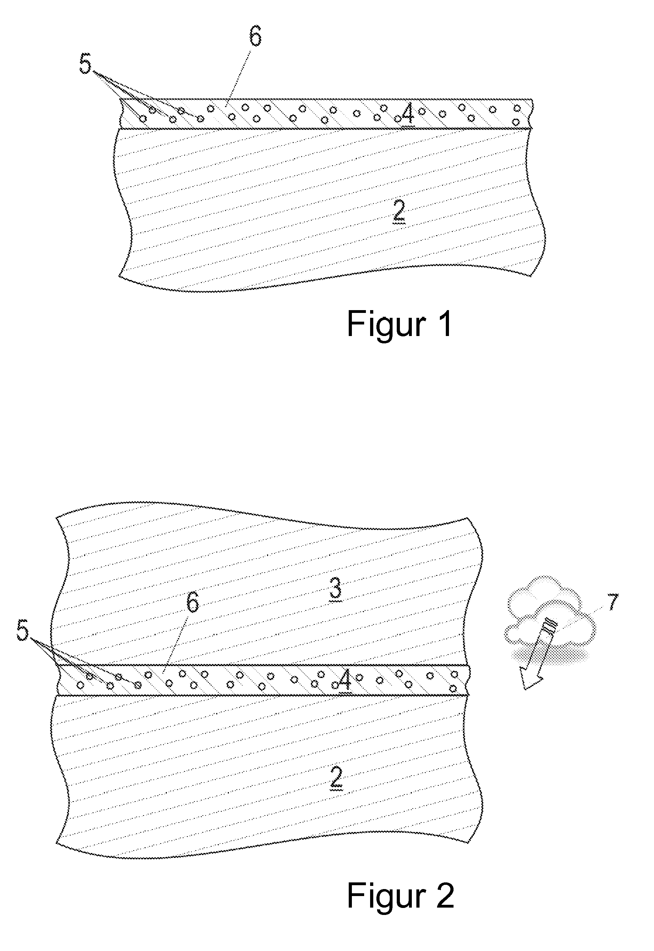

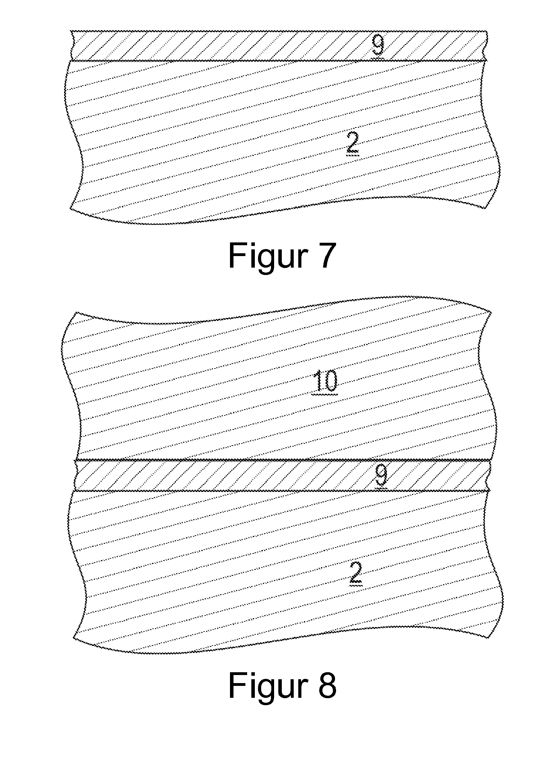

Die Figuren 1 bis 8 zeigen Querschnitte durch zeitlich unterschiedliche Stufen eines Reparaturverfahrens.

Die Zeichnungen sind schematisch. Es sind nur die für das unmittelbare Verständnis der Erfindung wesentlichen Elemente gezeigt.
Figur 1 zeigt eine härtbare Zusammensetzung 4 enthaltend mindestens ein Carbonsäurehydrazid 5 und mindestens ein Polyisocyanat 6, welche auf ein Substrat **S1** 2 appliziert worden ist. Im Rahmen dieses konkreten Beispiels stellt das Substrat **S1** 2 einen lackierten Metallflansch dar. Die Grössendarstellung der Carbonsäurehydrazid-Teilchen ist in dieser und den folgenden Darstellungen nicht massstabsgerecht. Typischerweise liegt der mittlere Teilchendurchmesser des Carbonsäurehydrazids unter 120 µm.

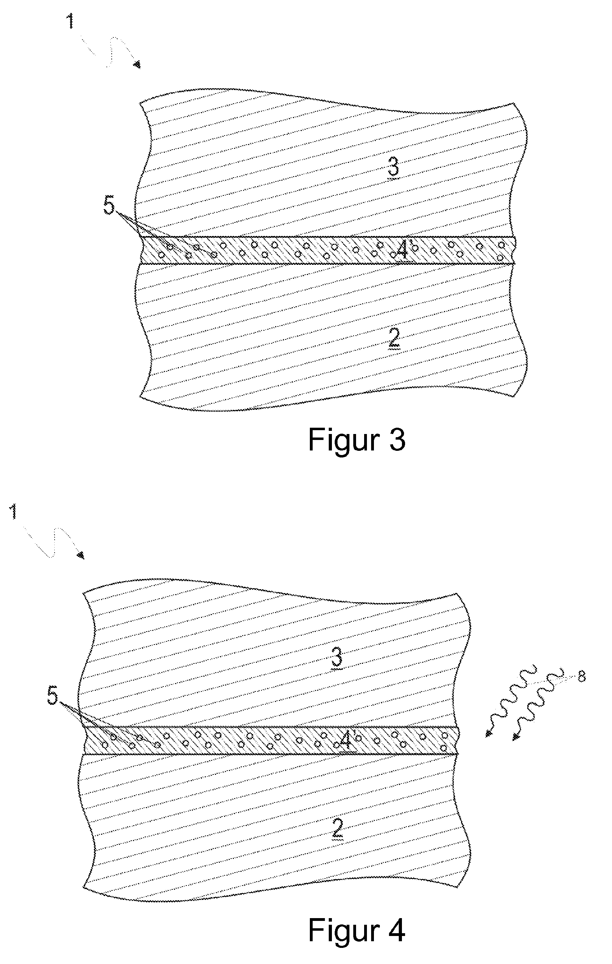

Figur 2 zeigt die applizierte härtbare Zusammensetzung 4, die innerhalb ihrer Offenzeit mit einem Substrat **S2** 3 kontaktiert worden ist. Im Rahmen dieses konkreten Beispiels stellt das Substrat **S2** 3 eine Windschutzscheibe dar. In diesem konkreten Beispiel härtet die härtbare Zusammensetzung 4 mittels Luftfeuchtigkeit 7 zu einem ausgehärteten Polyurethanklebstoff 4' aus und bildet damit einen Verbundkörper 1, wie in Figur 3 gezeigt, welcher ein Substrat **S1** 2, ein Substrat **S2** 3 und einen sich zwischen Substrat **S1** 2 und Substrat **S2** 3 befindlichen ausgehärteten Polyurethanklebstoff 4' aufweist, welcher Substrat **S1** und Substrat **S2** miteinander verbindet.

Zu einem gewissen Zeitpunkt soll die Klebeverbindung absichtlich gelöst und deshalb entklebt werden. Dies ist beispielsweise dann der Fall, wenn die Windschutzscheibe **S2** 3 durch Steinschlag beschädigt wurde und eine neue Scheibe eingesetzt werden soll.

Zu diesem Zeitpunkt, welcher in Figur 4 gezeigt ist, wird der ausgehärtete Polyurethan klebstoff 4' des Verbundkörpers 1 mittels Wärme 8 auf die Entklebungstemperatur des Klebstoffs erhitzt.

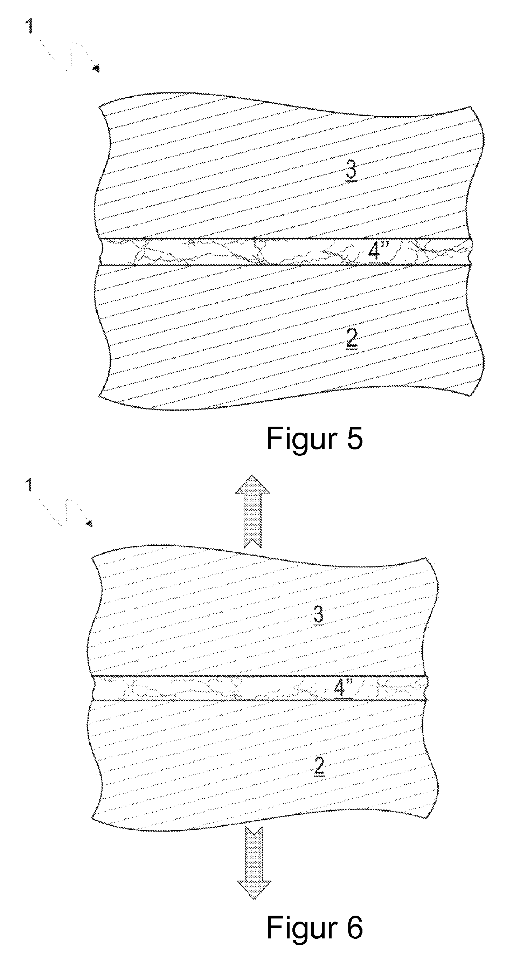

Durch die erhöhte Temperatur reagiert das im ausgehärteten Polyurethanklebstoff 4' vorhandene Carbonsäurehydrazid 5 und führt zu einem thermisch abgebauten Polyurethan klebstoff 4", wie in Figur 5 dargestellt.

Anschliessend wird das Substrat **S2** 3, hier die geschädigte Windschutzscheibe, entfernt, indem die Substrate **S1** 2 und **S2** 3 mechanisch getrennt bzw. die Klebeverbindung auseinander gezogen wird, wie in Figur 6 dargestellt. Reste des thermisch abgebauten Polyurethanklebstoffs 4" werden entfernt, das Substrat **S1** 2 wird gereinigt, gegebenenfalls vorbehandelt und schliesslich, wie in Figur 7 dargestellt, ein Reparaturklebstoff 9 auf das Substrat **S1** 2 appliziert. In Figur 8 wurde der Reparaturklebstoff 9 mit einem Substrat **S2'** 10, im vorliegenden Fall eine neue Windschutzscheibe, kontaktiert. Nach dem Aushärten des Reparaturklebstoffs 9 ergibt sich wiederum ein Verbundkörper 1.

### Bezugszeichenliste

- 1: Verbundkörper
- 2: Substrat **S1**
- 3: Substrat **S2**
- 4: härtbare Zusammensetzung enthaltend mindestens ein Carbonsäure- hydrazid 5 und ein Polyisocyanat 6
- 4': ausgehärteter Polyurethanklebstofif, bzw. ausgehärtete Zusammen- setzung
- 4": ausgehärteter, thermisch abgebauter Polyurethanklebstofif, bzw. ausgehärtete, thermisch abgebaute Zusammensetzung
- 5: Carbonsäurehydrazid
- 6: Polyisocyanat
- 7: Feuchtigkeit
- 8: Wärme
- 9: Reparaturklebstofif
- 10: Substrat **S2'**

### Beispiele

Als "Normklima" (NK) wird eine Temperatur von 23±1 °C und eine relative Luftfeuchtigkeit von 50±5% bezeichnet.

Beim in den Tabellen 1 bis 3 und 6 angegebenen Verhältnis n_{HY} / n_{NCO} handelt es sich jeweils um das Verhältnis (n_{HY} - n_{AK}) / n_{NCO}, wobei der Wert n_{AK} gleich null ist, da die in den Beispielen vorkommenden Polyurethanklebstoffe keine Aldehyde und Ketone enthalten oder freisetzen. Es handelt sich dabei also jeweils um das Verhältnis der Anzahl Hydrazid- zur Anzahl Isocyanatgruppen.

### 1. verwendete Carbonsäurehydrazide

| | | |
|---|---|---|
| Carbonsäurehydrazid ***H-1*** | Adipinsäuredihydrazid | Smp.ca. 180 °C |
| Carbonsäurehydrazid ***H-2*** | Isophthalsäuredihydrazid | Smp.ca. 220 °C |
| Carbonsäurehydrazid ***H-3*** | Oxalsäuredihydrazid | Smp.ca. 240 °C |
| Carbonsäurehydrazid ***H-4*** | Isonicotinsäurehydrazid | Smp.ca. 171 °C |
| Carbonsäurehydrazid ***H-5*** | 4-Nitrobenzhydrazid | Smp.ca. 216 °C |

Die Carbonsäurehydrazide wurden als feinteilige Pulver mit einer maximalen Teilchengrösse von < 90 µm, bestimmt mittels Grindometer nach DIN EN 21 524, eingesetzt.

### 2. Herstellung von Polvurethanklebstoffen

### Beispiele 1 bis 3 und Vergleichsbeispiel 4

In einem Polypropylenbecher mit Schraubverschluss wurden 60 Gewichtsteile Sikaflex^{®} 221 weiss mittels eines Zentrifugalmischers (Speed-Mixer™ DAC 150, FlackTek Inc.; 30 s bei 3000 U/min) mit einem Carbonsäurehydrazid gemäss Tabelle 1 zu einer homogenen Masse vermischt, diese unverzüglich in eine innenlackierte Aluminium-Kartusche abgefüllt und die Kartusche luftdicht verschlossen. Die Mengen sind in Gewichtsteilen angegeben.

Bei Sikaflex^{®} 221 weiss handelt es sich um einen einkomponentigen Polyurethandichtstoff und -klebstoff mit einem Gehalt an freien Isocyanatgruppen von ca. 0.7 Gewichts-%, erhältlich von Sika Schweiz AG.

Die Polyurethanklebstoffe wurden daraufhin ausgehärtet und nach unterschiedlicher Lagerung auf **Zugfestigkeit, Bruchdehnung** und **E-Modul** bei 0.5-5% Dehnung nach DIN EN 53504 bei Raumtemperatur geprüft, bei einer Zuggeschwindigkeit von 200 mm/min. Dazu wurde von jedem Beispiel ein Klebstoff-Film von 2 mm Dicke hergestellt und dieser während 7 Tagen im Normklima (NK) ausgehärtet. Aus dem Film wurden dann 12 Hanteln mit einer Länge von 75 mm, einer Steglänge von 30 mm und einer Stegbreite von 4 mm ausgestanzt und drei davon sofort gemessen. Die verbleibenden 9 Hanteln wurden jeweils zu dritt während 7 Tagen im Umluftofen bei 80 °C, bzw. bei 100 °C, bzw. bei 120 °C, gelagert und dann gemessen. Die Resultate sind in der Tabelle 1 angegeben, wobei die Werte jeweils Mittelwerte aus drei Einzelmessungen darstellen.

**Tabelle 1: Zusammensetzung und Resultate der Beispiele 1 bis 3 und des Vergleichsbeispiels 4.**

| **Beispiel** | | **1** | **2** | **3** | **4** **(Vgl.)** |
|---|---|---|---|---|---|
| Carbonsäurehydrazid | | ***H-1,*** 1.2 | ***H-2,*** 1.4 | ***H-3,*** 0.8 | - |
| Sikaflex^{®} 221 weiss | | 60.0 | 60.0 | 60.0 | 60.0 |
| n_{HY}/n_{NCO} | | 1.4 | 1.4 | 1.4 | - |
| Zugfestigkeit [MPa] | | 1.6 | 1.6 | 1.7 | 1.9 |
| Bruchdehnung [%] | (7d NK) | 520 | 480 | 350 | 620 |
| E-Modul [MPa] | | 3.3 | 2.8 | 3.6 | 2.6 |
| Zugfestigkeit [MPa] | (7d NK | 2.1 | 1.6 | 1.9 | 1.8 |
| Bruchdehnung [%] | +7d 80°C) | 620 | 400 | 300 | 580 |
| E-Modul [MPa] | | 3.2 | 2.3 | 4.1 | 3.0 |
| Zugfestigkeit [MPa] | (7d NK | 1.4 | 1.5 | 2.1 | 1.6 |
| Bruchdehnung [%] | +7d 100°C) | 280 | 240 | 370 | 560 |
| E-Modul [MPa] | | 2.8 | 2.5 | 3.6 | 2.8 |
| Zugfestigkeit [MPa] | (7d NK | 0.7 | 0.7 | 2.0 | 1.5 |
| Bruchdehnung [%] | +7d 120°C) | 20 | 50 | 230 | 310 |
| E-Modul [MPa] | | 5.4 | 2.6 | 3.7 | 2.7 |

Aus der Tabelle 1 ist ersichtlich, dass die ausgehärteten Polyurethanklebstoffe der Beispiele **1** bis **3** bis zu Temperaturen von 100 °C eine gute Beständigkeit aufwiesen, vergleichbar mit jener des Vergleichsbeispiels **4** ohne Carbonsäurehydrazid. Der Polyurethan klebstoff des Beispiels **3** wies auch bei 120 °C noch eine gute Beständigkeit auf, während die Beispiele **1** und **2** bereits einen gewissen Abbau des Polyurethanpolymers zeigten.

### Beispiele 5 bis 8 und Vergleichsbeispiel 9

Gleich wie für Beispiel **1** beschrieben wurden weitere Polyurethanklebstoffe gemäss den Angaben in der Tabelle 2 hergestellt (Mengenangaben in Gewichtsteilen). Die Zusammensetzung des Beispiels **7** entspricht derjenigen des Beispiels **1.**

Die Polyurethanklebstoffe wurden daraufhin ausgehärtet und nach unterschiedlicher Lagerung auf **Shore A-Härte** nach DIN 53505 geprüft. Dazu wurden von jedem Klebstoff 4 Probekörper hergestellt, diese während 7 Tagen im Normklima (NK) ausgehärtet und darauf auf Shore A-Härte gemessen. Anschliessend wurde je ein Probekörper während 7 Tagen bei 80 °C, bzw. bei 100 °C, bzw. bei 120 °C, sowie ein Probekörper während 10 Minuten bei 180 °C, in einem Umluftofen gelagert und dann erneut auf Shore A-Härte gemessen. Die Resultate sind in der Tabelle 2 angegeben.

**Tabelle 2: Zusammensetzung und Resultate der Beispiele 5 bis 8 und des Vergleichsbeispiels 9.**

| **Beispiel** | | **5** | **6** | **7** | **8** | **9** **(Vgl.)** |
|---|---|---|---|---|---|---|
| Carbonsäurehydrazid | | ***H-1,*** 0.4 | ***H-1,*** 0.8 | ***H-1,*** 1.2 | ***H-1,*** 1.6 | - |
| Sikaflex^{®} 221 weiss | | 60.0 | 60.0 | 60.0 | 60.0 | 60.0 |
| n_{HY}/n_{NCO} | | 0.5 | 1.0 | 1.4 | 1.9 | - |
| Shore A | (7d NK) | 47 | 46 | 46 | 45 | 46 |
| | (7d NK + 7d 80°C) | 38 | 38 | 39 | 38 | 40 |
| | (7dNK+7d100°C) | 35 | 31 | 37 | 35 | 41 |
| | (7d NK + 7d 120°C) | 32 | 10 | < 3 | < 3 | 38 |
| | (7d NK + 10' 180°C) | 12 | 7 | < 3 | < 3 | 35 |

Aus der Tabelle 2 ist ersichtlich, dass die ausgehärteten Polyurethanklebstoffe der Beispiele **5** bis **8** mit unterschiedlichen Mengen Adipinsäuredihydrazid bis zu Temperaturen von 100 °C eine gute Beständigkeit aufwiesen, vergleichbar mit jener des Vergleichsbeispiels **9** ohne Carbonsäurehydrazid. Die Beispiele **6** bis **8** zeigten nach 7 Tagen 120 °C und nach 10 Minuten 180 °C einen starken Abbau der Shore A-Härte, während Beispiel 5, welches eine unterstöchiometrische Menge an Hydrazidgruppen bezogen auf die vorhandenen Isocyanatgruppen aufwies, weniger stark abbaute.

### Beispiele 10 bis 14

Gleich wie für Beispiel **1** beschrieben wurden weitere Polyurethanklebstoffe gemäss den Angaben in der Tabelle 3 hergestellt (Mengenangaben in Gewichtsteilen). Die Zusammensetzungen der Beispiele **10, 11** und **12** entsprechen jeweils denjenigen der Beispiele **1, 2** und **3.**

Die Polyurethanklebstoffe wurden daraufhin ausgehärtet und nach unterschiedlicher Lagerung auf **Shore A-Härte** nach DIN 53505 geprüft wie für Beispiel **5** beschrieben.

**Tabelle 3: Zusammensetzung und Resultate der Beispiele 10 bis 14. "n.b". steht für "nicht bestimmt"**

| **Beispiel** | | **10** | **11** | **12** | **13** | **14** |
|---|---|---|---|---|---|---|
| Carbonsäurehydrazid | | ***H-1,*** 1.2 | ***H-2,*** 1.4 | ***H-3,*** 0.8 | ***H-4,*** 1.9 | ***H-5,*** 2.5 |
| Sikaflex^{®} 221 weiss | | 60.0 | 60.0 | 60.0 | 60.0 | 60.0 |
| n_{HY}/n_{NCO} | | 1.4 | 1.4 | 1.4 | 1.4 | 1.4 |
| Shore A | (7d NK) | 46 | 45 | 49 | 35 | 34 |
| | (7d NK + 7d 80°C) | 39 | 44 | 51 | 36 | 34 |
| | (7d NK + 7d 100°C) | 37 | 37 | 46 | 16 | 14 |
| | (7d NK + 7d 120°C) | < 3 | 21 | 42 | n.b. | n.b. |
| | (7d NK + 10' 180°C) | < 3 | 4 | 13 | < 3 | < 3 |

Aus der Tabelle 3 ist ersichtlich, dass die ausgehärteten Polyurethanklebstoffe der Beispiele **10** bis **12,** welche Dicarbonsäuredihydrazide enthalten, bis zu Temperaturen von 100 °C eine gute Beständigkeit aufwiesen. Nach 7 Tagen 120 °C und nach 10 Minuten 180 °C zeigte das Beispiel **10** eine starke Abnahme der Shore A-Härte und somit einen starken thermischen Abbau, während die Beispiele **11** und **12** erst bei etwas stärkerer thermischer Belastung eine Abnahme der Shore A-Härte zeigten. Die Beispiele **13** und **14,** welche Monocarbonsäurehydrazide enthalten, zeigten bereits bei einer Temperaturbelastung von 7 Tagen 100 °C einen Abbau der Shore A-Härte.

### 3. Herstellung von Verbundkörpern

### Beispiele 15 bis 17 und Vergleichsbeispiel 18

Mit den Polyurethanklebstoffen der Beispiele **1, 2** und **3** und des Vergleichsbeispiels **4** wurden anhand der Angaben in der Tabelle 4 Verbundkörper hergestellt. Dazu wurden jeweils 2 Glasplättchen von 6 mm Dicke, 25 mm Breite und 75 mm Länge (Floatglas; Firma Rocholl, Schönbrunn, Deutschland) mit Sika^{®} Aktivator (erhältlich bei Sika Schweiz AG) vorbehandelt. Nach einer Ablüftezeit von 10 Minuten wurden die beiden Plättchen so miteinander verklebt, dass diese an den Kopfenden um 12 mm überlappten und die Klebeverbindung eine Dimension von 12 mm x 25 mm und eine Dicke von 4 mm aufwies. Dabei waren jeweils die aktivierten Seiten der Plättchen in Kontakt mit dem Klebstoff. Für jedes Beispiel wurden 12 Verbundkörper hergestellt.

Der Polyurethanklebstoff in den Verbundkörpern wurde daraufhin während 7 Tagen im Normklima (NK) ausgehärtet und die Verbundkörper nach unterschiedlicher Lagerung auf **Zugscherfestigkeit, Bruchdehnung** und **E-Modul** bei 0.5-5% Dehnung mit Hilfe einer Zugprüfmaschine (Zwick) nach DIN EN 1465 geprüft, bei einer konstanten Querjochgeschwindigkeit von 20 mm/min. Dazu wurden für jedes Beispiel drei der 12 Verbundkörper unmittelbar nach der Aushärtung gemessen. Die verbleibenden neun wurden während 7 Tagen im Umluftofen bei 80 °C, bzw. bei 100 °C, bzw. bei 120 °C, gelagert und dann gemessen. Die Resultate sind in der Tabelle 4 angegeben, wobei die Werte jeweils Mittelwerte aus drei Einzelmessungen darstellen.

**Tabelle 4: Resultate der Beispiele 15 bis 17 und des Vergleichsbeispiels 18.**

| **Beispiel** | | **15** | **16** | **17** | **18** **(Vgl.)** |
|---|---|---|---|---|---|
| Polyurethan klebstoff aus Beispiel | | **1** | **2** | **3** | **4** |
| Zugscherfestigkeit [MPa] | | 1.1 | 1.4 | 1.4 | 1.4 |
| Bruchdehnung [%] | (7d NK) | 420 | 500 | 340 | 600 |
| E-Modul [MPa] | | 0.6 | 0.8 | 0.8 | 0.6 |
| Zugscherfestigkeit [MPa] | (7d NK | 1.3 | 1.4 | 1.6 | 1.5 |
| Bruchdehnung [%] | +7d 80°C) | 350 | 400 | 330 | 520 |
| E-Modul [MPa] | | 0.8 | 0.8 | 0.9 | 0.7 |
| Zugscherfestigkeit [MPa] | (7d NK | 0.8 | 0.8 | 1.5 | 1.4 |
| Bruchdehnung [%] | +7d 100°C) | 320 | 340 | 360 | 610 |
| E-Modul [MPa] | | 0.5 | 0.5 | 0.7 | 0.5 |
| Zugscherfestigkeit [MPa] | (7d NK | 0.1 | 0.2 | 0.9 | 1.2 |
| Bruchdehnung [%] | +7d 120°C) | 50 | 90 | 300 | 390 |
| E-Modul [MPa] | | 0.6 | 0.6 | 0.6 | 0.5 |

Aus der Tabelle 4 ist ersichtlich, dass die Klebeverbindungen der Verbundkörper der Beispiele **15** bis **17** bei Temperaturen bis 100 °C eine gute Beständigkeit aufwiesen. Die Klebeverbindung des Beispiels **17** wies auch bei 120 °C noch eine gute Beständigkeit auf, während die Beispiele **15** und **16** bereits einen gewissen Abbau des Polyurethanpolymers zeigten.

### 4. Entkleben von Klebeverbindungen

### Beispiele 19 bis 21 und Vergleichsbeispiel 22

Mit den Polyurethanklebstoffen der Beispiele **1, 2** und **3** und des Vergleichsbeispiels **4** wurden anhand der Angaben in der Tabelle 5 Verbundkörper hergestellt, gleich wie in Beispiel **15** beschrieben. Diese Verbundkörper wurden während 7 Tagen im Normklima ausgehärtet und anschliessend die Versuche zum Entkleben der Klebeverbindungen durchgeführt. Dazu wurde jeweils ein Set von drei Verbundkörpern in je einem Umluftofen mit 185 °C bzw. 190°C bzw. 200 °C während 15 Min. erhitzt. Anschliessend wurde an diesen Verbundkörpern die Zugscherfestigkeit wie in Beispiel **15** beschrieben bestimmt.

**Tabelle 5: Resultate der Beispiele 19 bis 21 und des Vergleichsbeispiels 22. "n.m." steht für "nicht messbar" (Klebstoff zu weich).**

| **Beispiel** | | **19** | **20** | **21** | **22** **(Vgl.)** |
|---|---|---|---|---|---|
| Polyurethanklebstoff aus Beispiel | | **1** | **2** | **3** | **4** |
| Zugscherfestigkeit [MPa] | (7d NK) | 1.1 | 1.4 | 1.4 | 1.4 |
| Zugscherfestigkeit [MPa] | (7d NK + 15' 185°C) | n.m. | n.m. | 0.22 | 0.43 |
| Zugscherfestigkeit [MPa] | (7d NK + 15' 190°C) | n.m. | n.m. | n.m. | 0.14 |
| Zugscherfestigkeit [MPa] | (7d NK + 15' 200°C) | n.m. | n.m. | n.m. | 0.10 |

Aus der Tabelle 5 ist ersichtlich, dass das Erhitzen der Verbundkörper der Beispiele **19** bis **21** während 15 Minuten in einem auf 185 °C bzw. 190 °C bzw. 200 °C geheizten Umluftofen ein Entkleben der Klebeverbindungen bewirkte; die Klebstoffe waren entweder derart thermisch abgebaut, dass die maschinelle Messung der Zugscherfestigkeit nicht mehr sinnvoll war, oder ihre Zugscherfestigkeit war auf ein sehr tiefes Niveau gesunken. Die mechanische Trennung der Glasplättchen war somit mit relativ geringem Kraftaufwand möglich, die Klebeverbindungen also gut lösbar. Das Vergleichsbeispiel **22** ohne Carbonsäurehydrazid zeigte bei thermischer Belastung ebenfalls eine Abnahme der Zugscherfestigkeit, aber wesentlich weniger stark als die erfindungsgemässen Beispiele.

### 5. Versuche zur Lagerstabilität von einkomponentigen Zusammensetzungen

### Beispiele 23 bis 27 und Vergleichsbeispiel 28

In einem Polypropylenbecher mit Schraubverschluss wurden 50 Gewichtsteile Polymer ***P-1,*** dessen Herstellung nachfolgend beschrieben ist, mittels eines Zentrifugalmischers (SpeedMixer™ DAC 150, FlackTek Inc.; 1 min. bei 2500 U/min) mit einem Carbonsäurehydrazid gemäss Tabelle 6 zu einer homogenen Masse vermischt, diese sofort in eine innenlackierte Aluminiumtube abgefüllt und diese luftdicht verschlossen. Die Mengen sind in Gewichtsteilen angegeben.

Das Polymer ***P-1*** wurde wie folgt hergestellt:
4000 g Polyoxypropylen-Diol (Acclaim^{®} 4200 N, Bayer; OH-Zahl 28.5 mg KOH/g) und 520 g 4,4`-Methylendiphenyldiisocyanat (MDI, Desmodur^{®} 44 MC L, Bayer) wurden bei 80 °C zu einem NCO-terminierten Polyurethanpolymeren mit einem Gehalt an freien Isocyanatgruppen von 1.90 Gewichts-% umgesetzt.

Die Zusammensetzungen wurden daraufhin nach unterschiedlicher Lagerung auf ihre **Viskosität** geprüft. Dazu wurde für jedes Beispiel die Zusammensetzung nach ihrer Herstellung in der verschlossenen Tube im Ofen bei 60 °C gelagert und die Viskosität ein erstes Mal nach 1 Tag (= "Visk. 1d 60°C") und ein zweites Mal nach 7 Tagen (= "Visk. 7d 60°C") Lagerdauer gemessen. Die Viskosität wurde dabei bei 20 °C auf einem thermostatisierten Kegel-Platten-Viskosimeter Physica UM (Kegeldurchmesser 20 mm, Kegelwinkel 1°, Kegelspitze-Platten-Abstand 0.05 mm, Scherrate 10 bis 1000 s⁻¹) gemessen. Die Resultate sind in der Tabelle 6 aufgeführt.

**Tabelle 6: Zusammensetzungen und Resultate der Beispiele 23 bis 27 und des Vergleichsbeispiels 28.**

| **Beispiel** | **23** | **24** | **25** | **26** | **27** | **28** **(Vgl.)** |
|---|---|---|---|---|---|---|
| Carbonsäurehydrazid | ***H-1,*** 2.0 | ***H-2,*** 2.2 | ***H-3,*** 1.3 | ***H-4,*** 3.1 | ***H-5,*** 4.1 | - |
| Polymer ***P-1*** | 50.0 | 50.0 | 50.0 | 50.0 | 50.0 | 50.0 |
| n_{HY} / n_{NCO} | 1.0 | 1.0 | 1.0 | 1.0 | 1.0 | - |
| Visk. [Pa.s] 1d 60°C | 47 | 49 | 46 | 74 | geliert | 45 |
| Visk. [Pa.s] 7d 60°C | 55 | 64 | 54 | geliert | geliert | 51 |

Aus der Tabelle 6 ist ersichtlich, dass die Zusammensetzungen enthaltend die Carbonsäurehydrazide ***H-1, H-2*** und ***H-3,*** welche Dicarbonsäuredihydrazide sind, bei der Lagerung nur einen geringen Anstieg der Viskosität zeigten, also bei 60 °C eine gute Lagerstabilität aufwiesen. Die Zusammensetzungen enthaltend die Carbonsäurehydrazide ***H-4*** und ***H-5,*** bei welchen es sich um Monocarbonsäurehydrazide handelt, gelierten hingegen bei der Lagerung. Diese Carbonsäurehydrazide reagierten offenbar mit Isocyanatgruppen, trotz ihres hohen Schmelzpunktes.

## Patentansprüche

1. Verwendung eines Carbonsäurehydrazids zum Entkleben einer Klebeverbindung umfassend einen ausgehärteten, das Carbonsäurehydrazid enthaltenden, Polyurethanklebstoff.

2. Verwendung nach Anspruch 1, **dadurch gekennzeichnet, dass** das Carbonsäurehydrazid einen Schmelzpunkt im Bereich von 160 °C bis 260 °C, insbesondere von 175 °C bis 240 °C, aufweist.

3. Verwendung nach Anspruch 1 oder 2, **dadurch gekennzeichnet, dass** das Carbonsäurehydrazid ein Polycarbonsäurehydrazid **HY** ist, insbesondere ausgewählt ist aus der Gruppe bestehend aus Oxalsäuredihydrazid, Adipinsäuredihydrazid, Azelainsäuredihydrazid, Sebacinsäuredihydrazid und Isophthalsäuredihydrazid.

4. Verfahren zum Entkleben einer Klebeverbindung umfassend den Schritt des Erhitzens eines ausgehärteten, ein Carbonsäurehydrazid enthaltenden Polyurethanklebstoffs auf eine Entklebungstemperatur von mindestens 80 °C.

5. Verfahren nach Anspruch 4, **dadurch gekennzeichnet, dass** das Carbonsäurehydrazid einen Schmelzpunkt im Bereich von 160 °C bis 260 °C, insbesondere von 175 °C bis 240 °C, aufweist.

6. Verfahren nach Anspruch 4 oder 5, **dadurch gekennzeichnet, dass** das Carbonsäurehydrazid ein Polycarbonsäurehydrazid **HY** ist, insbesondere ausgewählt ist aus der Gruppe bestehend aus Oxalsäuredihydrazid, Adipinsäuredihydrazid, Azelainsäuredihydrazid, Sebacinsäuredihydrazid und Isophthalsäuredihydrazid.

7. Verfahren nach einem der Ansprüche 4 bis 6, **dadurch gekennzeichnet, dass** die Entklebungstemperatur oberhalb von 100 °C, bevorzugt im Bereich von 120 °C bis 240 °C, besonders bevorzugt im Bereich von 140 °C bis 220 °C, liegt.

8. Härtbare Zusammensetzung umfassend
α) mindestens ein Polyisocyanat **P,** und
β) mindestens ein Carbonsäurehydrazid,
mit der Massgabe, dass das Verhältnis (n_{HY} - n_{AK}) n_{NCO} einen Wert von 0.2 bis 3, insbesondere von 0.5 bis 2, aufweist,
wobei n_{HY} für die Anzahl der in der Zusammensetzung vorhandenen Hydrazidgruppen steht,
n_{AK} für die Anzahl der in der Zusammensetzung freisetzbaren und vorhandenen Aldehyd- und Ketogruppen steht; und
n_{NCO} für die Anzahl der in der Zusammensetzung vorhandenen Isocyanatgruppen steht.

9. Härtbare Zusammensetzung gemäss Anspruch 8, **dadurch gekennzeichnet, dass** das Carbonsäurehydrazid einen Schmelzpunkt im Bereich von 160 °C bis 260 °C, insbesondere von 175 °C bis 240 °C, aufweist.

10. Härtbare Zusammensetzung gemäss Anspruch 8 oder 9, **dadurch gekennzeichnet, dass** das Carbonsäurehydrazid ein Polycarbonsäurehydrazid HY ist, insbesondere ausgewählt ist aus der Gruppe bestehend aus Oxalsäuredihydrazid, Adipinsäuredihydrazid, Azelainsäuredihydrazid, Sebacinsäuredihydrazid und Isophthalsäuredihydrazid.

11. Härtbare Zusammensetzung gemäss einem der Ansprüche 8 bis 10, **dadurch gekennzeichnet, dass** die Zusammensetzung eine einkomponentige Zusammensetzung ist, und dass das Polyisocyanat **P** ein Isocyanatgruppen aufweisendes Polyurethanpolymer **PUP** ist.

12. Härtbare Zusammensetzung gemäss einem der Ansprüche 8 bis 10, **dadurch gekennzeichnet, dass** die Zusammensetzung eine zweikomponentige Zusammensetzung ist und aus einer ersten Komponente **K1** und einer zweiten Komponente **K2** besteht, wobei die erste Komponente **K1** das Polyisocyanat **P** und die zweite Komponente **K2** ein Polyol und/oder ein Polythiol und/oder ein Polyamin enthält.

13. Ausgehärtete Zusammensetzung enthaltend mindestens ein Carbonsäurehydrazid, welche durch die Aushärtung einer härtbaren Zusammensetzung gemäss einem der Ansprüche 8 bis 12 bei einer Temperatur unterhalb von 80 °C, insbesondere unterhalb von 60 °C, erhalten wird.

14. Verbundkörper (1), aufweisend ein Substrat **S1** (2), ein Substrat **S2** (3) und eine sich zwischen Substrat **S1** (2) und Substrat **S2** (3) befindliche ausgehärtete Zusammensetzung (4') gemäss Anspruch 13, welche Substrat **S1** und Substrat **S2** miteinander verklebt.

15. Reparaturverfahren umfassend die Schritte
a) Erhitzen eines ausgehärteten Polyurethanklebstoffs (4') eines Verbundkörpers (1),
aufweisend ein Substrat **S1** (2), ein Substrat **S2** (3) und einen sich zwischen Substrat **S1** und Substrat **S2** befindlichen ausgehärteten Polyurethanklebstoff (4') enthaltend mindestens ein Carbonsäurehydrazid (5),
auf eine Temperatur von mindestens 80 °C, bevorzugt oberhalb von 100 °C, insbesondere auf eine Temperatur im Bereich von 120 °C bis 240 °C, unter Entkleben der Klebverbindung infolge des durch Hitze initiierten thermischen Abbaus des ausgehärteten Polyurethanklebstoffs (4');
b) anschliessendes Entfernen des Substrats **S2** (3) vom Verbundkörper (1);
c) anschliessendes Entfernen von allenfalls auf Substrat **S1** (2) verbliebenen Resten des thermisch abgebauten Polyurethanklebstoffs (4");
d) gegebenenfalls anschliessendes Reinigen und/oder Vorbehandeln des Substrats **S1;**
sowie entweder die Schritte e) und f) oder die Schritte e') und f'):
e) an Schritt c) oder d) anschliessendes Applizieren eines Reparaturklebstoffs (9) auf das Substrat **S1** (2); und
f) Kontaktieren des Reparaturklebstoffs (9) mit einem Substrat **S2'** (10);
e') an Schritt c) oder d) anschliessendes Applizieren eines Reparaturklebstoffs (9) auf ein Substrat **S2'** (10); und
f) Kontaktieren des Reparaturklebstoffs (9) mit dem Substrat **S1** (2).
